# EUROPEAN PATENT SPECIFICATION

(11) **EP 4 299 356 B1**
(45) Date of publication and mention of the grant of the patent: **07.05.2025**
(21) Application number: 21947837.7
(22) Date of filing: 17.08.2021
(51) Int. Cl.: B60K 35/10, B60R 11/02, B60R 16/023, B62J 50/22

(54) **MOTORCYCLE AND CENTRAL CONTROL SYSTEM THEREOF**
MOTORRAD UND ZENTRALES STEUERUNGSSYSTEM DAFÜR
MOTOCYCLETTE ET SYSTÈME DE COMMANDE CENTRAL ASSOCIÉ

(30) Priority: 30.06.2021 CN 202110743756
(43) Date of publication of application: 03.01.2024
(73) Proprietor: Zhejiang CFMOTO Power Co., Ltd., Hangzhou, Zhejiang 311100 (CN)
(72) Inventor: ZHAN, Daoyong, Hangzhou, Zhejiang 311100 (CN); CHEN, Zhiyong, Hangzhou, Zhejiang 311100 (CN); WU, Yong, Hangzhou, Zhejiang 311100 (CN); LIU, Jiujiang, Hangzhou, Zhejiang 311100 (CN); PAN, Tao, Hangzhou, Zhejiang 311100 (CN); WEI, Maolin, Hangzhou, Zhejiang 311100 (CN); FENG, Meilin, Hangzhou, Zhejiang 311100 (CN); YANG, Bingbing, Hangzhou, Zhejiang 311100 (CN); GUO, Xu, Hangzhou, Zhejiang 311100 (CN)
(74) Representative: Sun, Yiming
(86) International application number: PCT/CN2021/113025
(87) International publication number: WO 2023/272900

(56) References cited:
- EP-A1- 3 247 044
- CN-A- 105 730 235
- CN-A- 108 107 785
- CN-A- 110 722 985
- CN-A- 110 979 009
- CN-A- 111 371 875
- CN-S- 305 819 978
- US-A- 6 157 297
- US-A1- 2011 074 689
- US-A1- 2018 326 850
- US-B1- 10 885 728

## Description

### RELATED APPLICATION INFORMATION

The present application claims the benefits of priority to Chinese Patent Application No. 202110743756.5, filed with the Chinese Patent Office on June 30, 2021.

### FIELD OF THE DISCLOSURE

The present invention relates to the field of motorcycle, and in particular to a motorcycle and centralized control system thereof.

### BACKGROUND OF THE DISCLOSURE

Traditional motorcycles generally only provide instrument information through a dashboard. However, motorcycles are becoming increasingly intelligent with the increasing demand for intelligent entertainment functions (such as multi-media and navigation).

Centralized control systems equipped with entertainment functions are increasingly appearing in various cars. Compared to traditional cars, cars equipped with entertainment functions generally integrate a centralized control display screen in the area between the driver seat and the passenger seat. This is generally easier to implement in cars because the cockpit space of the car is large, making it easier to arrange the instrument dashboard and centralized control display screen at the same time. However, this is relatively difficult to implement on motorcycles due to the small front space and low cost of the motorcycle.

Presently, existing motorcycles that support intelligent functions generally adopt a solution where the instrument function and entertainment function are independent of each other. In other words, two different display screens are needed to achieve instrument display function and entertainment display function and two independent control units are needed to control the two display screens to achieve display control and function support. It is difficult to arrange the instrument screen for showing instrument information and the entertainment screen for entertainment applications due to the limited space in the front area of the motorcycle, and the instrument screen and the entertainment screen are too small, which is not conducive to users viewing relevant information.

There is currently no effective solution proposed on how to meet the intelligent entertainment function requirements of motorcycles and provide a more suitable centralized control system.

The document US 2011/074689 A1 discloses a motorcycle comprising a frame, a plurality of wheels comprising at least one front wheel and at least one rear wheel, a suspension system comprising a front suspension and a rear suspension, the at least one front wheel being connected to the frame through the front suspension, and the at least one rear wheel being connected to the frame through the rear suspension, a power system disposed on the frame for providing power to the motorcycle, the at least one of the front wheel and the rear wheel being connected to the power system in a transmission mode;at least one seat disposed on the frame, and a manipulation system for manipulating the running of the motorcycle. Wherein the motorcycle further comprises a centralized control system comprising a control unit and a display screen, the display screen is disposed adjacent to the manipulation system and in front of the at least one seat.

### SUMMARY OF THE INVENTION

The present invention provides a motorcycle and a centralized control system to solve at least one problem above.

In a first aspect, the invention provides a motorcycle. The motorcycle includes a frame, a plurality of wheels, a suspension system, a power system, at least one seat and a manipulation system. The plurality of wheels include at least one front wheel and at least one rear wheel. The suspension system includes a front suspension and a rear suspension. the at least one front wheel is connected to the frame through the front suspension, and the at least one rear wheel is connected to the frame through the rear suspension. The power system is disposed on the frame for providing power to the motorcycle, and at least one of the front wheel and the rear wheel is connected to the power system. At least one seat is disposed on the frame. The manipulation system is used to manipulate the running of the motorcycle. The motorcycle further includes a centralized control system which includes a control unit and a display screen. The display screen is disposed adjacent to the manipulation system and in front of the at least one seat. At least two operating systems are running in the control unit; and the at least two operating systems comprise a first operating system and a second operating system. The control unit is capable of controlling the display screen to display one or a plurality of instrument images and one or a plurality of entertainment images in at least two different and switchable display modes based on at least two operating systems. The at least two different and switchable display modes comprise a first display mode and a second display mode. The instrument images and the entertainment images displayed on the display screen are both generated under control of the first operating system and an area occupied by the instrument images on the display screen is greater than an area occupied by the entertainment images on the display screen in the first display mode. At least some of the instrument images and at least some of the entertainment images are generated under control of the first operating system and at least another some of the instrument images and at least another some of the entertainment images are generated under control of the second operating system in the second display mode and an area occupied by the instrument images on the display screen is less than or equal to an area occupied by the entertainment images on the display screen in the second display mode.

The details of one or more embodiments of this application are presented in the following drawings and descriptions to make the other features, objectives, and advantages of this application more concise and understandable.

### BRIEF DESCRIPTION OF THE DRAWINGS

The accompanying drawings described here are intended to provide a further understanding of the present application and form a part of it. The illustrative embodiments and their explanations of the present application are used to explain the present application and do not constitute an improper limitation of the present application. In FIGS:
FIG. 1 is a perspective view of a motorcycle in an embodiment of the present application;
FIG. 2 is a perspective view of a portion of the motorcycle shown in FIG. 1;
FIG. 3 is a perspective view of a portion of the motorcycle in another embodiment of the present application;
FIG. 4 is a schematic diagram of the display interface of the display screen in the first display mode in an embodiment of the present application;
FIG. 5 is a schematic diagram of the display interface of the display screen in the second display mode in an embodiment of the present application;
FIG. 6 is a schematic diagram showing each display area in the first display mode in an embodiment of the present application;
FIG. 7 is a schematic diagram showing each display area in the second display mode in an embodiment of the present application;
FIG. 8 is a schematic diagram showing a first type of adjustment in the display interface of the display screen in an embodiment of the present application;
FIG. 9 is a schematic diagram showing a second type of adjustment in the display interface of the display screen in an embodiment of the present application;
FIG. 10 is another schematic diagram of the display interface of the display screen in the second display mode in an embodiment of the present application;
FIG. 11 is a schematic diagram of the layer fusion principle in the second display mode in the embodiment of the present application;
FIG. 12 is a schematic diagram of a second display interface formed by layer fusion in the second display mode in an embodiment of the present application;
FIG. 13 is a schematic diagram of a control unit in an embodiment of the present application;
FIG. 14 is a schematic diagram of an electronic architecture driving the display screen in an embodiment of the present application;
FIG. 15 is a schematic diagram of the structure of some centralized operation controls in an embodiment of the present application;
FIG. 16 is a flowchart illustrating a method for operating the centralized operation control in an embodiment of the present application;
FIG. 17 is a schematic diagram of the display interface for setting Fn button function;
FIG. 18 is a schematic diagram of the display interface for setting the grip heating function; and
FIG. 19 is a schematic diagram of the display interface for setting the volume adjustment function.

### DETAILED DESCRIPTION

For a better understanding of the purpose, technical solutions and advantages of the present invention, a preferred embodiment of the present invention is described and illustrated below. It should be noted that the embodiments described herein are only used to explain this application and are not intended to limit. The appearance of the phrase in various places in the specification does not necessarily mean the same embodiment, nor does it mean that it is mutually exclusive or alternative to other embodiments. It will be clearly or implicitly understood by those skilled in the art that certain features of the embodiments described in this specification may be combined with certain features of other embodiments without conflict. As used in this specification, the terms "a", "an", "the", "these", and the like do not denote quantitative limitations, and they may be singular or plural. The terms "including", "including", "possessing", and any variations thereof referred to in this application are intended to cover non-exclusive inclusion. As used in this specification, the terms "connected to", "linked to" "coupled to" and the like are not necessarily limited to physical or mechanical connections, but may include electrical connections, whether directly or indirectly. As used in this specification, the term "a plurality of" refers to two or more. As used in this specification, the terms "first", "second", "third" and the like are only for distinguishing similar objects, and do not represent a specific order for the objects.

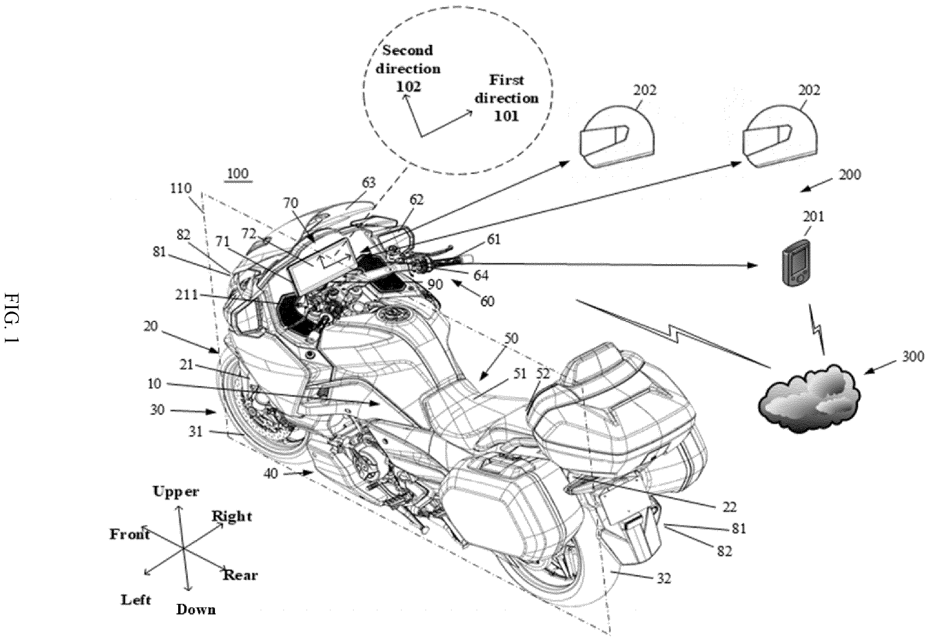

As shown in FIGS. 1 and 2, a motorcycle 100 is a motorcycle with various components including a frame 10, a suspension system 20, a plurality of wheels 30, a power system 40, at least one seat 50, a manipulation system 60, and a centralized control system 70.

The motorcycle 100 has a front end and a rear end based on a traveling direction. The general orientations of front, rear, up (upper), down (lower), left and right for the motorcycle 100 are defined in FIG. 1 for clarity. The wheels 30 include a front wheel 31 and a rear wheel 32. The front wheel 31 is connected to the frame 10 through a front suspension 21, and the rear wheel 32 is connected to the frame 10 through a rear suspension 22. A power system 40 for providing power for the running of the motorcycle is disposed on the frame 10. At least one of the front wheel 31 and the rear wheel 32 is connected to the power system 40 in a transmission mode. The seat 50 is arranged on the frame 10 and includes at least one driver seat 51. The manipulation system 60 is used to manipulate the operation of the motorcycle 100. Optionally, all or some of the components in the manipulation system 60 are electrically connected to the power system 40. The manipulation system 60 includes a direction manipulation component 61. As shown, the direction manipulation component 61 is located, for example, above the front wheel 31 and in front of the driver seat 51.

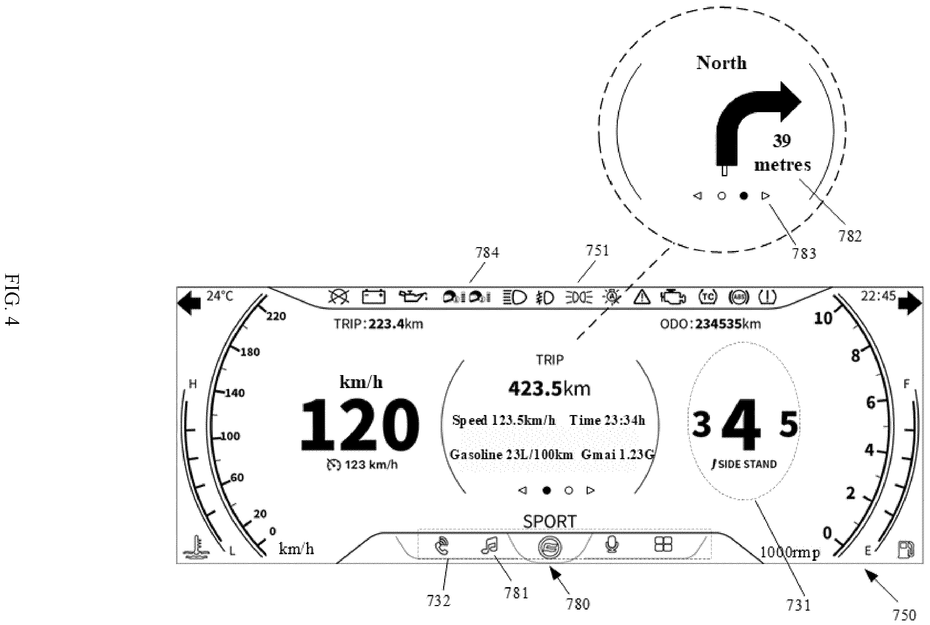

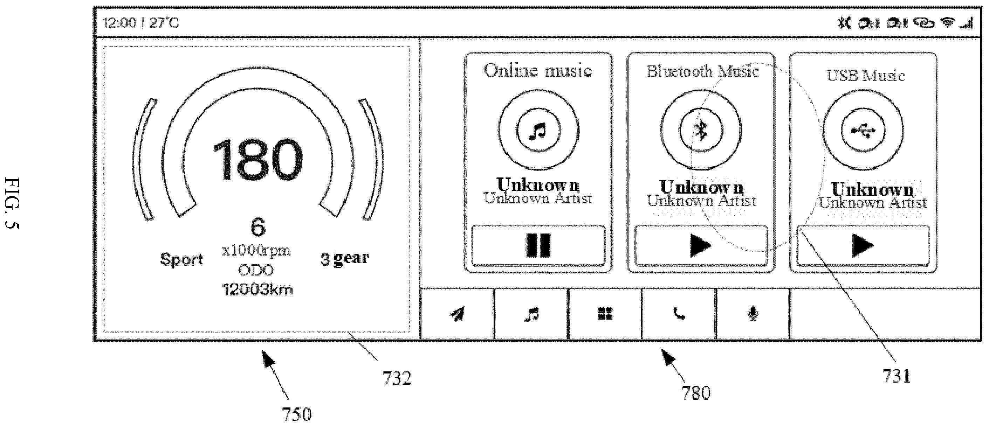

The centralized control system 70 includes a control unit 71 and a display screen 72. The control unit 71 is capable of controlling the display screen 72 to display one or a plurality of instrument images 750 and one or a plurality of entertainment images 780. Please further refer to FIGS. 4 and 5, the control unit 71 is capable of controlling the display screen 72 to display one or a plurality of instrument images 750 and one or a plurality of entertainment images 780 in at least two different and switchable display modes. The at least two different and switchable display modes include a first display mode and a second display mode. An area occupied by the instrument images 750 on the display screen 72 is greater than an area occupied by the entertainment images 780 on the display screen 72 in the first display mode. An area occupied by the instrument images 750 on the display screen 72 is less than or equal to an area occupied by the entertainment images 780 on the display screen 72 in the second display mode.

It should be noted that in the motorcycle 100 of this application, the centralized control system 70 is capable of controlling the display screen 72 to display both instrument images 750 and entertainment images 780. The display screen 72 has the functions of both instrument screen and entertainment screen. The display screen 72 can provide users with at least two different display modes to switch and adjust the displayed images in different display modes (corresponding to different user needs), which is beneficial for users to view relevant information. Displaying instrument images 750 and entertainment images 780 in different display modes overcomes the shortcomings of single display function and limited display area in existing motorcycles, expands the display function of the display screen and expands the display area of instrument display and entertainment display. In this way, the space in the front area of the motorcycle 100 can be fully utilized to arrange the display screen 72. In both the first display mode and second display mode, although the display screen 72 displays both instrument images 750 and entertainment images 780, there are significant differences between the two display modes. The first display mode may mainly display instrument information, and may also be referred to as the "full-screen display mode". The second display mode mainly displays entertainment information, and may also be referred to as the "split-screen display mode".

It should be noted that the display screen 72 in this application for the motorcycle 100 is a single piece of complete display screen, rather than a split screen (two screens), thus fully utilizing the relatively compact space in the front area of motorcycle 100. Compared to arranging two relatively small splicing screens, there is no need to be limited by the display limitations of the two screens. In existing motorcycles, the size of the instrument panel is surely limited in order to arrange the entertainment display screen because of limited space, thereby making both the entertainment display and instrument panel smaller. In addition, the users need to view instrument information and entertainment information separately on two relatively small display screens. When entertainment display is not needed, the users can only view instrument information through the relatively small instrument panel, which significantly reduces the convenience of users viewing relevant information. The technical solution in this application solves this technical problem well, which is beneficial for drivers to view relevant information. Moreover, a single piece of display screen is an unified display style, thereby giving the driver a better visual experience and saving the cost of manufacturing the display screen.

As used herein, the term "user" may refer to a driver, passengers, or other personnel using the centralized control system of the motorcycle.

Further, the working mode of control unit 71 and the control method of display screen 72 are completely different in the two different display modes. For example, at least two operating systems are running in the control unit 71. The control unit 71 controls the display screen 72 to display instrument images 750 and entertainment images 780 based on at least two operating systems. The at least two operating systems comprise a first operating system and a second operating system. The first operating system receives real-time instrument information and controls the display screen 72 to display the corresponding instrument images 750 in real-time during running of the motorcycle 100. The second operating system runs the entertainment application upon receiving control command and controls the display screen 72 to display the entertainment images 780 corresponding to the entertainment application. The images generated by the two operating systems need to be fused and then provided to the display screen 72 for displaying an entire interface on the display screen 72 at the same time.

In addition, the electrical/electronic architecture of the control unit 71, which can run at least two operating systems is different from that of the on-board centralized control system in existing motorcycles. In an embodiment of this application, the at least two operating systems mentioned above are running in two processing kernels. The centralized control system 70 can further provide users with richer and more convenient human-computer interaction methods, such as touch screen, voice control, remote interconnection control, or the like. Moreover, one or a plurality of centralized operation controls 64 (such as hard buttons) are arranged on the manipulation system 60 of motorcycle 100 to improve the convenience for drivers to quickly operate key functional items during driving.

The types of motorcycles applicable and the arrangement of the display screen on the motorcycle are described below.

The motorcycle 100 mentioned in the embodiments of this application may be various types of motorcycles.

The motorcycles of the present application may be divided into different types, including two-wheeled motorcycles, three-wheeled motorcycles, and four-wheeled motorcycles.

The two-wheeled motorcycle include one front wheel and one rear wheel and may be a Naked bike (NK), Sport Racing (SR), cruiser, Touring motorcycle, rally, off-road motorcycle, SuperMoto, scooters, UnderBone motorcycle, or the like.

One type of three-wheeled motorcycle include one front wheel and two rear wheels. Motorcycles equipped with such wheels are usually a type of special motorcycle, such as regular tricycles, which are mostly used as production tools. However, some manufacturers of motorcycles also use regular tricycles in this form.

Another type of three-wheeled motorcycle includes two front wheels and one rear wheel. Similarly, motorcycles equipped with these types of wheels are usually special motorcycles, such as reverse tricycles, which are relatively rare, such as Bombardier reverse tricycle.

Another type of three-wheeled motorcycle includes a front wheel, a rear wheel, and a side wheel. Motorcycles equipped with these types of wheels can be referred to as side tricycles, or may be referred to as side three-wheeled motorcycles.

The four-wheeled motorcycle includes two front wheels and two rear wheels. The four-wheeled motorcycle may be an ATV (All-Terrain Motorcycle, driving on various roads), UTV (Utility Motorcycle, multi-purpose motorcycle), SSV (Side by Side Motorcycle, tandem motorcycle), or the like. The motorcycle mentioned herein may be motorcycles or may be an all-terrain vehicle.

The motorcycle 100 mentioned herein may be either a fuel powered motorcycle or an electric powered motorcycle. The power system 40 may be a fuel powered system when the motorcycle 100 is a fuel powered motorcycle; and the power system may be an electric powered system when the motorcycle 100 is an electric powered motorcycle.

The display screen 72 is located directly in front of driver seat 51. It should be noted that the display screen 72 is located obliquely in front of driver seat 51.

The seat(s) 50 include at least one driver seat 51. Alternatively, the seat(s) 50 may further include at least one passenger seat 52. The driver seat 51 and the passenger seat 52 may be arranged along a front-rear direction of the motorcycle 100 or along a left-right direction of the motorcycle 100. The driver seat 51 and the passenger seat 52 may be two separate, and spaced seats, or may be two areas on a single seat. In the case where driver seat 51 and passenger seat 52 are two areas on the single seat, the driver seat 51 and passenger seat 52 can also be referred to as areas available for the driver to sit in and areas available for passengers to sit in, respectively.

A longitudinal mid-plane of the driver seat 51 is defined as a plane 110. The driver seat 51 may be substantially symmetrical along the longitudinal mid-plane. It should be noted that the driver seat 51 may not be a symmetrical structure. The display screen 72 is at least partially located on the plane 110 and on the side closer to the direction manipulation component 61. It should be noted that the display screen 72 intersects with the plane 110. The display screen 72 is more aligned with the driver field of view, thereby making it easier for the driver to view the images on display screen 72. It should be noted that the plane 110 is also the midpoint of the direction manipulation component 61 when the direction manipulation component 61 is in a center position. Further, the motorcycle 100 may also be substantially symmetrical with respective to the plane 110.

In one embodiment, the seat(s) 50 of the motorcycle 100 may be one or a plurality of saddles (shown in FIG. 1). The saddles 50 are mounted on the frame 10. The saddles include at least one driver seat 51. Alternatively, the driver seat 51 may be an area on the saddle where the driver can sit in. Generally, the driver saddle 51 is located on the front side of the saddle, that is, the side closer to the front wheel 11 and direction manipulation component 61. In addition, the saddles may further include a passenger saddle 52. The passenger saddle 52 may be an area on the saddle where passengers can sit in. The passenger saddle 52 is located on the rear side the saddle, behind the driver saddle 51 mentioned above. In this embodiment, the saddle(s) extends along a front-rear direction, and a longitudinal mid-plane of the saddle(s) is defined as a plane 110. The display screen 72 is located in front of the saddle(s), closer to the side of direction manipulation component 61. The display screen 72 intersects with the longitudinal mid-plane of the saddle(s).

It should be noted that there is no limitation on the type of seat 50 in this application.

The display screen 72 is closer to the manipulation system 60.

In one embodiment, the direction manipulation component 61 may be a grip assembly and may include a left grip 611 and a right grip 612. The direction manipulation component 61 also include a handlebars 613 connecting the left grip 611 and the right grip 612. The display screen 72 and the handlebars 613 are both at least partially located on the plane 110. The display screen 72 is located at one of the following positions: the side of the handlebars 613 away from the seat(s) 50, the side of the handlebars closer to the seat(s) 50, and a position above the handlebars 613. It should be noted that there is no limitation on the structure of the direction manipulation component 61. In another embodiment, the direction manipulation component 61 may be a steering wheel.

Please continue to refer to FIG. 1, a rear-view mirror 62 is also arranged on the front side of motorcycle 100. The size and position of the display screen 72 need to be selected such that it does not interfere with the direction manipulation component 61 and the rear-view mirror 62 from the driver's perspective. In other words, the display screen 72 should not be obstructed or interfered with the direction manipulation component 61, the rear-view mirror 62, or other structures on the motorcycle 100.

In addition, a front baffle 63 may be arranged on the motorcycle 100, and the display screen 72 is located behind the front baffle 63. The front baffle 63 may be manufactured by shading materials, which can prevent direct sunlight from shining on the display screen 72, thereby helping the driver to not be able to clearly see the displayed images on the display screen 72. In other words, the front baffle 63 may be a front light baffle.

In some embodiments, the display screen 72 nay be mounted on the frame 10, and the display screen 72 does not rotate with the rotation of the direction manipulation component 61. When the direction manipulation component 61 is a grip assembly, the display screen 72 does not rotate with the rotation of the grip assembly. In this way, which can prevent the inconvenience caused by the rotation of display screen 72 for the driver to view the displayed information. The driver can still easily view the displayed information on the display screen 72 in front of their field of view even if the running direction of the motorcycle 100 changes. The display screen 72 does not rotate with the rotation of direction manipulation component 61, which is beneficial for extending the service life of display screen 72 and preventing damage to display screen 72.

In other embodiments, the front suspension 21 includes a front fork 211 connected to the frame 10 through a shaft 212, with the lower end of the front fork 211 connected to the front wheel 31, and the upper end of the front fork 211 connected to the direction manipulation component 61. The display screen 72 is connected to an upper end of the front fork 211. The display screen 72 is capable of rotating with the rotation of the direction manipulation component 61. It can also be used as a commonly used display screen arrangement method.

In an alternative embodiment, the motorcycle 100 may include only one piece of display screen 72. The electronic images that need to be displayed for users to view can be displayed through the display screen 72. Therefore, the relatively compact space on motorcycle 100 is further saved, and at the same time, the cost of manufacturing display screen 72 is further reduced.

In one embodiment, a ratio of a diagonal length of the display screen 72 to a distance from a front wheel 31 center to a rear wheel 32 center is in the range from 0.11 to 0.3 in order to arrange a display screen with a more suitable size. Preferably, the ratio of the diagonal length of the display screen 72 to a distance from a front wheel 31 center to a rear wheel 32 center may be in the range from 0.13 to 0.26. More preferably, for example, the ratio may be in the range from 0.17 to 0.19.

The diagonal length of the display screen 72 herein may refer to the diagonal length of the visible area of display screen 72. It should be noted that the range herein includes endpoint values. The range from 0.11 to 0.3 indicates that the values are greater than or equal to 0.11 and less than or equal to 0.3.

In one embodiment, if the distance from the front wheel center to the rear wheel center is in the range from 1.1 m to 1.3 m, then the display screen 72 is an 8-inch display screen. Alternatively, if the distance from the front wheel center to the rear wheel center is in the range from 1.5 m to 1.7 m, then the display screen 72 is a 12.3-inch display screen.

A ratio of the diagonal length of display screen 72 to a distance between the two most distal ends of the direction manipulation component 61 is in the range from 0.19 to 0.52. It should be noted that the direction manipulation component 61 includes a left grip 611 and a right grip 612. The distance between the two most distal ends of the direction manipulation component 61 refers to the distance between the most distal end of left grip 611 (away from the end of right grip 612) and the most distal end of the right grip 612 (away from the end of left grip 611). Preferably, the ratio may be in the range from 0.23 to 0.45. More preferably, the ratio of the diagonal length of display screen 72 to the distance between the two most distal ends of the direction manipulation component 61 may be in the range from 0.29 to 0.35.

In addition, the display screen 72 is inclined by an appropriate angle to facilitate the driver to view the information on the display screen 72. When the motorcycle 100 is parking on a horizontal plane with the front wheel 31 and rear wheel 32 as support points, an angle between the display screen 72 and the horizontal plane is in the range from 20° to 70°. Preferably, the angle may be, for example, in the range from 35° to 55°.

In one embodiment, the display screen 72 can extend substantially in a first direction 101 perpendicular to the plane 110, or in a second direction 102 parallel to the plane 110. The display screen 72 herein may be either a horizontal screen display or a vertical screen display. In one embodiment, as shown in FIGS. 1 and 2, the motorcycle 100 comprises a horizontal display screen extending along the first direction 101 (a left-right direction of the motorcycle). All of the images displayed on display screen 72 are displayed in a an up-down direction (that is a second direction 102 perpendicular to the first direction 101). In an alternative embodiment, the display screen 72 is a vertical display screen. The display screen 72 extends along the second direction 102, and all the images displayed on the display screen 72 are displayed in a an up-down direction (that is the second direction 102). The shorter side of the display screen 72 is parallel to the first direction 101 mentioned above. Whether the display screen 72 is installed horizontally or vertically depends on the type of motorcycle 100 and the structure or size of the front area of the motorcycle 100. In addition, it may also depend on user preferences and design needs. A left-right direction is defined based on the user riding on motorcycle 100.

FIG. 3 is a perspective view of a motorcycle front area in an alternative embodiment, in which the display screen 72 is vertically mounted on the motorcycle 100. It should be noted that in certain scenarios, vertical screen displays have beneficial effects compared to the horizontal screen displays. For example, some motorcycles cannot be equipped with a larger display screen due to the narrow and long design of the motorcycle front area. In this case, a vertical display screen has a larger size than the horizontal display screen. For example, a vertical display may have better performance for displaying certain user interfaces.

In addition, the display screen 72 herein may also be a rotatable display screen. The display screen 72 is connected to the frame 10 or front suspension 21 of the motorcycle 100 (preferably, connected to the front fork 211), and can rotate relative to the frame 10 or front suspension 21. In one embodiment, the motorcycle 100 further includes a connection structure 90, and the display screen 72 is connected to the frame 10 or front suspension 21 through the connection structure 90. The display screen 72 can rotate around the connection structure 90. The control unit 71 is capable of controlling the display screen 72 to rotate the images on the display screen 72 based on gravity sensing, control signals, or the like. Rotating images displayed on display screen 72 refers to rotating the displayed images relative to display screen 72. The control unit 71 is capable of controlling the display interface of the display screen 72 to perform adjustment to facilitate users to view relevant information and to make reasonable use of the display area of the display screen. In an alternative embodiment, please refer to FIG. 8, a first type of adjustment is made to the display interface of the display screen 72 under control of the control unit 71 when the display screen 72 is rotated in the first display mode. The first type of adjustment comprises switching the arrangement of a first portion and a second portion of the instrument images between a left-right arrangement and an upper-lower arrangement. Referring to areas 721 and 722, the first portion of the instrument images 750 and the second portion of the instrument images 750 can be displayed in the area 721 and the area 722, respectively. It can be seen that the arrangement of the display interface is mainly adjusted by adjusting the position relationship of various portions of the instrument images 750 in the first display mode. Please refer to FIG. 9, a second type of adjustment is made to the display interface of the display screen 72 under control of the control unit 71 when the display screen 72 is rotated in the second display mode. The second type of adjustment comprises switching the arrangement of at least some of the instrument images 750 and at least some of the entertainment images 780 between an left-right arrangement and an upper-lower arrangement. Referring to areas 726 and 728, at least some of the instrument images 750 and at least some of the entertainment images 780 can be displayed in the area 726 and the area 728, respectively. It can be seen that, unlike in the first display mode, the arrangement of the display interface needs to be adjusted by adjusting the position relationship between at least some of the instrument images 750 and at least some of the entertainment images 780 in the second display mode.

The display screen 72 is capable rotating from the first direction 101 to the second direction 102. In combination with FIGS. 8 and 9, the display screen 72 extending and rotating from the first direction 101 to the second direction 102. At this point, the first type of adjustment in the first display mode involves switching the left-right arrangement of the first portion and the second portion of the instrument images 750 to an upper-lower arrangement. The second type of adjustment in the second display mode comprises switching the arrangement of at least some of the instrument images 750 and at least some of the entertainment images 780 between a left-right arrangement and an upper-lower arrangement, vice versa.

The display screen 72 may be connected to the motorcycle 100 in an embedding method or in a protruding method. The embedding method refers to the back of the packaging shell of the display screen 72 being embedded in the motorcycle 100 without being exposed. The protruding method specifically refers to the back of the packaging shell of the display screen 72 being at least partially exposed, connected to the motorcycle 100 only through a portion of the back area or through at least some of the lower area. The arrangement of the display screen 72 is related to the type of motorcycle 100, and the arrangements of the display screen varies for different motorcycles. The application does not specifically limit this.

The centralized control system 70 above will be described in detail below.

It should be noted that the above centralized control system 70 may be mounted on motorcycle 100, or may be manufactured as a portion of the motorcycle 100; or may be independently of the motorcycle 100 body.

As mentioned, the centralized control system 70 includes a control unit 71 and a display screen 72. In an embodiment, the control unit 71 and display screen 72 may be encapsulated together through an encapsulated shell to form an integrated machine screen, which is electrically connected to the power system 40 on the motorcycle 100 by a conductive structure (such as wires) and mechanically connected to the frame 10 or front fork 211 on the motorcycle 100 by a connection structure 90. It should be noted that the connection structure 90 may be a mechanical connection structure such as a fastener or connector. The above conductive structure and the above mechanical connection structure may also be manufactured integrally, so that the installation between the centralized control system 70 and the frame 10 or front fork 211 of the motorcycle 100 can be completed through only one connection. In this embodiment, the arrangement of the centralized control system 70 can refer to the arrangement of the display screen 72 above. In an alternative embodiment, the control unit 71 and the display screen 72 may also be respectively arranged on motorcycle 100. In other words, the display screen 72 is at least partially located on plane 110, and the arrangement of the control unit 71 is not necessarily limited to this, and the control unit 71 can be located at any position on motorcycle 100. It should be noted that an electrical connection is required between the control unit 71 and the display screen 72 to ensure the control of the display screen 72 by the control unit 71.

The control unit 71 is capable of controlling the display screen 72 to display instrument images 750 and entertainment images 780. The instrument images 750 described herein refers to images used to show at least motorcycle driving information and motorcycle status information. The users can know motorcycle driving information and motorcycle status information at any time by viewing the instrument images 750, thereby ensuring driving experience for users. The entertainment images described herein refer to images used to show a running entertainment application and/or an entertainment application to be run that can be supported. The entertainment applications are selected from at least one of the group consisting of navigation application, multi-media application, driver assistance application, voice control application, and interconnection network application.

Both the above instrument images 750 and the above entertainment images 780 may include one or more combination of text images, digital images, and shape images.

For example, some motorcycle driving information may be represented by both instrument text images and instrument digital images. For example, a driving speed of 120 km/h include the instrument text image (km/h) and instrument digital image (120). In addition, a gear information of motorcycle can be represented by both instrument text images (such as GEAR) and instrument digital images (such as 4). Some motorcycle driving information may be represented by instrument text images, instrument digital images, and instrument shape images. For example, a dial may be displayed by a shape image (circular shape). The dial information may be represented by instrument text images (measurement unit), instrument digital images (the digital in the dial), and instrument shape images (pointer pattern). For example, motorcycle status information may be represented by instrument shape images (such as icon of "front lighting indicator" ). Similarly, the shape images may include battery indicator light, oil indicator light, front fog light indicator light, water temperature alarm light, low temperature display (snowflake), and the like. It should be noted that the embodiments of the present application are described by way of representation and not limitation.

As an example, in a multi-media application, file names, playback modes, lyrics, and subtitles are displayed by entertainment text images. The playback duration is displayed by entertainment digital images. The shape of notes and radios are displayed by entertainment shape images. The entertainment screen may be any screen displayed to the users. In addition, entertainment shape images may also include one or a plurality of entertainment application status icons 784 or one or a plurality of entertainment shortcut icons 781.

The first display mode and the second display mode mentioned above are described in detail below.

Firstly, a first instrument images are used to refer to the instrument images 750 displayed on the display screen 72 in the first display mode for distinguish from the instrument images 750 displayed in the second display mode. Unless otherwise specified, the description and limitations of the instrument images 750 herein are applicable to the first instrument images. Similarly, a first entertainment image images are used to refer to the instrument images 750 displayed on the display screen 72 in the first display mode. Unless otherwise specified, the description and limitations of the instrument images 780 herein are applicable to the first entertainment images.

FIG. 4 is a schematic diagram of the display interface of the display screen in the first display mode of the present application. FIG. 6 is a schematic diagram showing each display area in the first display mode in an embodiment of the present application; As shown in FIGS. 4 and 6, the display interface of display screen 72 may include a first instrument display area, a first entertainment display area, and a switchable display area in the first display mode.

A left area 721 and a right area 722 in the display interface of the display screen shown in FIG. 6 show the first instrument display area. The first instrument display area is used to display at least some of the instrument images. In an alternative embodiment, the first instrument display area displays necessary instrument images; such as speed of 120 km/h, 4th gear, etc. It should be noted that these necessary instrument images are the instrument information that must be provided to the driver during the running of the motorcycle 100.

The bottom central area 723 in FIG. 6 shows a first entertainment display area. The first entertainment display area is used to display at least some of the first entertainment images, such as entertainment shortcut icon 781. The entertainment shortcut icon 781 is used to prompt the user that the centralized control system 70 can provide entertainment applications and allow users to make choices. Alternatively, the display screen 72 is capable of switching from the first display mode to the second display mode when the control unit 71 detects control commands for these entertainment shortcut icons 781. The entertainment shortcut icon 781 described herein may include shortcut icons for navigation applications, multi-media applications, voice control applications, and interconnection applications, and may further include setting, HOME, and other icons. Users can touch the shortcut icon to make the display screen 72 display the corresponding interface. As an example, the note icon is used to prompt users to enter the music playback interface. In an alternative embodiment, the display screen 72 includes at least a main HOME icon in the first display mode. The display screen 72 is capable of switching from the first display mode to the second display mode after the user touches the main HOME icon, and can display more quick icons for entertainment applications for the user to choose from in the second display mode.

The middle area 724 of the display interface shown in FIG. 6 also includes a switchable display area. The switchable display area is used to display some of the first instrument images and/or some of the first entertainment images. In the case where the switchable display area is used to display some of the first instrument images, the display content is the instrument images 750, which may be hidden or displayed. Compared to the necessary instrument image, these can be called non-necessary instrument image. These non-necessary instrument images can be displayed on the display screen 72 when the driver needs to view them. For example, the fuel consumption is 23 L/100 km, etc. In the case where the switchable display area is used to display some of the first entertainment images, the display content is a simplified entertainment image 782. The simplified entertainment images 782 displays necessary entertainment information in a simple manner to save display area compared to the complete entertainment image 785. For example, the display screen only displaying text images of "North", digital images of "39 meters", and shape images of "Navigation Arrows" for navigation functions, but does not display a complete map. The text images of "North", digital images of "39 meters", and shape images of "Navigation Arrows" form a simple navigation message "the motorcycle is running north and will soon turn right after 39 meters". For example, only some text information (such as some lyrics) is displayed for the multi-media playback function.

The control unit 71 is capable of controlling the switchable display area of the display screen 72 to switch from a first display picture to a second display picture when the centralized control system 70 receives a first control command in the first display mode. The first display picture may be used to display a portion of the first instrument images, and the second display picture may be used to display some of the first entertainment image. In addition, this application does not exclude the case where both the first display picture and the second display picture are used to display a portion of the first instrument images or both are used to display some of the first entertainment images. In this case, the first display picture and the second display picture display different instrument images 750 or different entertainment images 780.

A control command of controlling the switchable display area of the display screen to switch from a first display picture to a second display picture that is received by the centralized control system 70 (referred to a first control command) may include a sliding touch in the switchable display of the display screen 72; a touch on a button icon 783 displayed on the display screen 72; (such as a touch on a left-right page flipping button displayed on the display screen; the button icon 783 displayed on the display screen may also be referred to a "soft button" to distinguish from the operation controls (for example, hard button) in the manipulation system 60); or a control command received by a certain operation control in the manipulation system 60; or a voice control command. The certain operation control in the manipulation system 60 may be a hard button in the manipulation system 60.

It should be noted that the switchable display area mentioned above is not a necessary area in the display interface in the first display mode. In some alternative embodiments, the display interface of the display screen 72 may not include a switchable display area in the first display mode, that is to say, the display interface of the display screen 72 includes a first instrument display area and a first entertainment display area.

The display interface of the display screen 72 may further include a status display area, such as a top area 725 in the display interface of the display screen in FIG. 6 in the first display mode. The status display area may also be used to display at least some of the first instrument images, but to display images used to represent motorcycle status information. The images that represent the status information of the motorcycle may be one or a plurality of motorcycle status icons 751, such as front lighting indicator light icon, battery indicator light icon, oil indicator light icon, front fog light indicator light icon, water temperature alarm light icon, low temperature display icon, and the like. Taking the front lighting indicator icon as an example, when it lights up, it represents that the "front lighting indicator" is on, and when it goes out, it represents that the "front lighting indicator" is off. For example, when the low fuel level indicator icon is lit, then the fuel level is below the required value, and when the low fuel level indicator icon is turned off, then the fuel level is above the required value. At least some of these motorcycle status icons 751 are also the necessary instrument images. If the display interface does not include a status display area, the motorcycle status icons 751 that are necessary instrument images can also be displayed in the first instrument display area. In addition, the status display area may also be used to display the entertainment function status icons 784, which is used to remind the user of the current status of the entertainment applications (such as on or off state, connected or disconnected state, or the like) that the centralized control system can provide. For example, the "Bluetooth helmet icon" indicates that the Bluetooth headset is connected when it is lit, and not when it is turned off. From this, it can be seen that each image (each icon) in the status display area is capable of switching between a first state and a second state when receiving control commands, where the first state and the second state are respectively on and off.

In addition to the entertainment shortcut icons 781 and entertainment function status icons 784 mentioned above, a first type of entertainment icons may also be displayed on the display screen 72. The first type of entertainment icons includes, for example, "Bluetooth connection icon", "phone icon", and the like., which serve both switching and status displaying purposes. The user clicks on the "Bluetooth connection icon" on the display screen 72 when they want to turn on the Bluetooth. Correspondingly, the "Bluetooth connection icon" will switch from off state to on state; thereby making it easier for users to use relevant functions. In addition, a "phone icon" can not only represent functional status information, but also serve as the entertainment shortcut icon 781. When the "phone icon" lights up, it indicates that a call is waiting to be answered or the call is currently playing. At the same time, users can answer or reject the call by touching the "phone icon". The first type of entertainment icons may be displayed in the first entertainment display area, the switchable display area, the status display area, or any other suitable area.

It should be noted that the above description on the images displayed in the first display mode in conjunction with the display interface shown in FIG. 4 are described by way of representation and not limitation of the display interface of the display screen in the first display mode.

For example, the simplified entertainment images 782, the entertainment shortcut icons 781, and the entertainment application status icons 784 may be displayed in the same area or in different areas. In one embodiment, the display areas of the display screen 72 are divided in the first display mode for the convenience of discussion. In practical applications, such a clear division may not be necessary. It is also possible to use the position occupied by images that represents complete information as a display area.

Alternatively, the first entertainment images include only the entertainment shortcut icons 781. In other words, the display screen only prompts the user that the centralized control system can provide entertainment applications, but does not display the information related to entertainment applications in the first display mode.

Alternatively, the first entertainment images include an entertainment shortcut icons 781, and an entertainment application status icon 784 and/or a simplified entertainment images 782.

A ratio of an area occupied by the first instrument images on the display screen 72 to an area occupied by the first entertainment images on the display screen 72 may be in the range from 3 to 20 in the first display mode. Further, the ratio may be in the range from 6 to 15. Further, the ratio of the area occupied by the first instrument images on the display screen to the area occupied by the first entertainment images on the display screen may be in the range from 8 to 12. In this way, the almost entire screen of the display screen 72 displays instrument images 750 under control of the centralized control system 70 when users do not need entertainment applications, thereby making it more convenient for users to view instrument information. Meanwhile, although the area occupied by the first entertainment image on the display screen 72 is relatively small, but the information can still be clearly displayed.

The user can switch the display screen from the first display mode to the second display mode when they need to use entertainment applications. Thus, the instrument images 750 on the display screen 72 can be reduced and/or some of the instrument images 750 can be hidden, thereby increasing area for displaying entertainment images 780. In this way, a display screen is capable of adjusting the displayed content and its occupied area in different display modes.

The second display mode mentioned above are described in detail below. A second instrument images are used to refer to the instrument images 750 displayed on the display screen 72 in the second display mode for distinguish from the instrument images 750 displayed in the first display mode. Unless otherwise specified, the description and limitations of the instrument images 750 herein are applicable to the second instrument images. Similarly, a second entertainment image images are used to refer to the instrument images 750 displayed on the display screen 72 in the second display mode. Unless otherwise specified, the description and limitations of the instrument images 780 herein are applicable to the second entertainment images.

FIG. 5 is a schematic diagram of the display interface of the display screen in the second display mode of the present application. FIG. 7 is a schematic diagram showing each display area in the second display mode in an embodiment of the present application. As shown in FIGS. 5 and 7, the display interface of display screen 72 may include a second instrument display area and a second entertainment display area in the second display mode.

The second instrument display area may be, for example a left area 726 in the display interface of the display screen shown in FIG. 7. The second instrument display area is used to display the second instrument images. The second instrument display area displays at least the necessary instrument images to continuously provide the necessary instrument information for the user in the second display mode during the running of the motorcycle 100. In addition, the second instrument display area may also display unnecessary instrument images, which is not limited in this application. Images representing motorcycle driving information may be displayed in the left area 726, for example, by a circular instrument.

The second entertainment display area may be, for example the middle right area 728 and the bottom right area 729 in the display interface of the display screen shown in FIG. 7. The second entertainment display area is used to display the second entertainment images. The second entertainment images may include a complete entertainment image 785. It should be noted that this application does not exclude the case where the second entertainment images include the simplified entertainment images 782. The complete entertainment images 785 or simplified entertainment images 782 may be displayed, for example in the middle right area 728. The entertainment shortcut icons 781 may be displayed in the bottom right area 729. The entertainment shortcut icons 781 displayed in the second display mode may be the same as the entertainment shortcut icons displayed in the first display mode. It should be noted that the entertainment shortcut icons 781 displayed in the second display mode may be the different from the entertainment shortcut icons displayed in the first display mode. The number of the entertainment shortcut icons 781 displayed in the second display mode may be greater than or equal to the number of the entertainment shortcut icons 781 displayed in the first display mode.

The number of the instrument images 750 displayed on display screen 72 in the second display mode may be smaller than the number of the instrument images 750 displayed on display screen 72 in the first display mode, Thus, some of the instrument images 750 can be hidden, thereby increasing area for displaying entertainment images 780 in the second display mode. In order to ensure safe driving, even in the second display mode, the necessary instrument images still need to be displayed on the display screen 72. Therefore, the instrument images 750 displayed on the display screen 72 in the second display mode is the same as some of the instrument images 750 displayed on the display screen 72 in the first display mode.

The number of the entertainment images 780 displayed on display screen 72 in the second display mode may be greater than the number of the entertainment images 780 displayed on display screen 72 in the first display mode, which is more convenient to view complete entertainment information.

Optionally, the entertainment images 780 corresponding to each entertainment application may be switched in the second entertainment display area, or may be further divided and displayed in the second entertainment display area. In addition, they may also be displayed in thumbnail, negative screen, floating window, and the like.

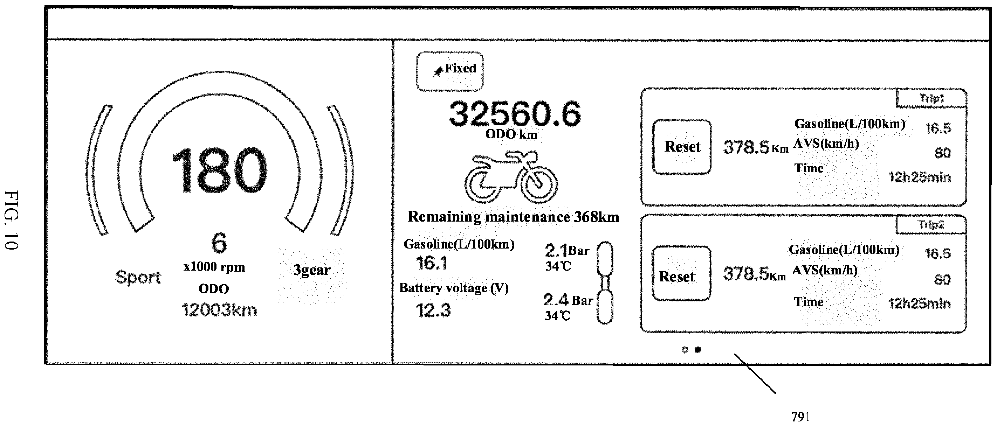

FIG. 10 is another schematic diagram of the display interface of the display screen in the second display mode in an embodiment of the present application. As shown in FIG. 10, images related to motorcycle information (such as "remaining maintenance mileage of 368 km/h", "average fuel consumption (L/100km) of 16.5", "average speed (km/h) of 80", or the like) are displayed in the second entertainment display area. Although these images are related to motorcycle information, they are generated by the aforementioned second operating system, which is different from the instrument images generated by the first operating system. In addition, in order to allow users to quickly view the images related to motorcycle information, the above images may be displayed on the negative screen 791 of display screen 72. The negative screen 791 described herein may refer to a negative screen on the phone. The number of the negative screen 791 may be one, two or more to display a plurality of related images. The call out of negative screen 791 may also be by touch control, operation control, or voice control. The call out of negative screen 791 may also be by a sliding operation from top to bottom or from bottom to top on the display screen 72. The negative screen 791 may include a first negative screen and a second negative screen. The switching between the first negative screen and the second negative screen may be by a sliding operation from left to right or from right to left on the display screen 72 after the negative screen 791 is called out. Please continue to refer to FIG. 10, the negative screen 791 shown in FIG. 10 may include a "pinned" icon, which may be a touchable soft button. The current negative screen 791 on the display screen 72 may be pinned for a predetermined time length by touching the "pinned" soft button.

In addition, the display interface of the display screen 72 may also include a status display area in the second display mode, such as the top area 727 in FIG. 7. The status display area may also be used to display the motorcycle status icons 751, and in addition, may also be used to display the entertainment application status icons 784. It should be noted that the motorcycle status icons 751 may also be displayed in the second instrument display area. The entertainment application status icons 784 may also be displayed in the second entertainment display area.

It should be noted that the above description on the images displayed in the second display mode in conjunction with the display interface shown in FIG. 5 are described by way of representation and not limitation of the display interface of the display screen 72 in the second display mode.

The control unit 71 is capable of controlling at least one first area 731 on the display screen 72 to display the instrument images 750 in the first display mode and to display the entertainment images 780 in the second display mode. The first area 731 mentioned above is a portion of the area occupied by the first instrument images on the display screen 72, and also the portion where the entertainment images 780 is displayed in the second display mode. Taking the display interface shown in FIGS. 4 and 5 as an example, the first area 731 may be in the right side of the middle area (ie. an area where overlaps between 722 in FIG. 6 and 728 in FIG. 7.

In an alternative embodiment, the first area 731 may be a partial display area of the display screen 72.

Preferably, the display screen 72 may also include at least one third area 733 in the first display mode in order to prompt the user that the centralized control system 70 can provide entertainment applications (i.e. the entertainment applications to be run that can be supported). The control unit 71 is also used to control at least one third area 733 on the display screen 72 to display entertainment images 780 in the first display mode. Preferably, the entertainment images 780 displayed in the third area 733 may be the entertainment shortcut icons 781. It should be noted that the third area 733 is an area on the display screen 72 other than the first area 731. In addition, the entertainment images 780 may also include entertainment application status icons 784, simplified entertainment images 782, and the like.

Correspondingly, the control unit 71 may also be used to control at least one second area 732 on the display screen 72 to display instrument images 780 in the second display mode in order to continuously provide instrument information to the user. The second area 732 mentioned in the second display mode still refers to any area on the display screen 72 other than the first area 731, and may be the same area as the third area 733 mentioned in the first display mode. Alternatively, the second area 732 mentioned in the second display mode may be different from the third area 733 mentioned in the first display mode. It should be noted that the control unit 71 is used to control display screen 72 to display instrument images 750 in both the first display mode and second display mode for driving safety.

It can be seen that in the motorcycle 100 of this application, the centralized control system 70 is capable of controlling the same area (at least one first area 731) on the display screen 72 to display instrument images 750 or entertainment images 780 in different display modes, without being limited to two display screens (ie. the instrument screen and entertainment screen).

The centralized control system 70 after started controls the display screen 72 to work in both the first display mode and the second display mode and to switch between the first display mode and the second display mode. The positions of any images displayed in the first display mode and the second display mode can be defined by the system in advance. The relevant images are placed on the relevant coordinate system when displaying.

In an alternative embodiment, after the centralized control system 70 is started, the control unit 71 is used to control the display screen 72 to display images first in the first display mode and then to display images in the second display mode. It should be noted that after the centralized control system 70 is started, the display screen enters the first display mode firstly, providing users with more complete instrument information in an lager area. Then, the display screen is switched from the first display mode to the second display mode to provide entertainment information based on user needs and preferences.

It should be noted that the embodiment of this application does not exclude the situation where the display screen 72 first displays the startup screen after the centralized control system 70 is started. If there is a startup screen, it enters the first display mode after the startup screen, and then enters the second display mode. In other words, after the centralized control system 70 is started, compared to the second display mode, the first display mode can be entered earlier.

The display screen is switched from the first display mode to the second display mode when the centralized control system 70 is started and the second operating system automatically starts the switching program; or base on a first predetermined command (a predetermined command of switching from the first display mode to the second display mode) of the control unit 71; or when the control unit 71 detects a control command of switching for the entertainment shortcut icons 781 in the display interface of the display screen in the first display mode; or when the control unit 71 detects a first display mode switching command.

The centralized control system 70 is started and the second operating system automatically starts the switching program. In other words, the display screen 72 displays images in the first display mode after the centralized control system 70 is started, and after the second operating system meets a predetermined condition, the control unit 71 controls the display screen 72 to switch from the first display mode to the second display mode. The predetermined condition may be, for example, that the startup of the second operating system has been completed, or that the startup of the second operating system has been completed for a predetermined time length. The first predetermined command of the control unit 71 may be generated based on user settings, or automatically generated and saved based on user preferences by the control unit 71. The control unit 71 controls the display screen 72 to switch from the first display mode to the second display mode based on the first predetermined command. The control command of switching for the entertainment shortcut icons 781 in the display interface of the display screen in the first display mode may include a touch on a certain entertainment shortcut icon, a selection of a certain entertainment shortcut icon through the operation controls, a voice control for switching a certain entertainment shortcut icon. Optionally, the touch function of the display screen 72 is locked during motorcycle driving to ensure driving safety, and users can switch display modes through voice control or operation of controls. After stopping driving, the touch function will be turned on again. The first display mode switching command may include, for example, long press on the operation controls, voice control for switching display mode, or the like.

The display screen is switched from the second display mode to the first display mode based on an operating state of the second operating system; or based on a second predetermined command of the control unit 71; or when the control unit 71 detects a second display mode switching command.

The operating state of the second operating system may include, for example, the end of the entertainment application provided by the second operating system, such as the end of navigation application. This second predetermined command of control unit 71 is similar to the first predetermined command of the control unit 71, and may be generated based on the user settings or preferences. The display screen 72 is switched from the second display mode to the first display mode based on the second predetermined command. The second display mode switching command may be similar to the first display mode switching command, and may include for example, long press on the operation controls, voice control for switching display mode, or the like.

In general, the display screen 72 is capable of displaying both the instrument images 750 corresponding to the instrument information and the entertainment images 780 corresponding to the entertainment function by switching between the two display modes (the first display mode and the second display mode). Further, the generation of the instrument images 750 and the provision of entertainment applications rely on the support of control unit 71.

In the present application, at least two operating systems are running in the control unit 71, for example, a first operating system and a second operating system. The control unit controls the display screen 72 to display instrument images 750 and entertainment images 780 based on the at least two operating systems.

The first operating system receives real-time instrument information and controls the display screen 72 to display the corresponding instrument images 750 in real-time when the motorcycle 100 is running. For example, the display screen 72 displays a first instrument images in the first display mode, and displays a second instrument images in the second display mode.

The first operating system is always running when the motorcycle 100 is running to display the instrument images in real-time. After the centralized control system 70 is started, the first operating system automatically starts running. Moreover, the time when the first operating system starts and runs shall not be later than the time when the second operating system starts and runs. The first operating system starts running earlier than the second operating system.

The first operating system may include, for example, RTOS system, QNX system, or Linux system. The RTOS system may use the FreeRTOS system (a small real-time operating system).

The second operating system runs the entertainment application upon receiving control command and controls the display screen 72 to display the entertainment images 780 corresponding to the entertainment application. For example, the second entertainment images displayed on the display screen 72 in the second display mode are generated and displayed based on control of the second operating system.

After the centralized control system 70 is started, the second operating system automatically starts running. The time required for the second operating system to start is generally greater than the time required for the first operating system to start.

The second operating system may include, for example, Android system or Linux system. In addition, other intelligent operating systems that can be applied to a mobile terminal 200 can also be adopted.

The first operating system and the second operating system are two different operating systems from each other. In other words, at least two different operating systems are running on control unit 71. For example, the first operating system is a Linux system, and the second operating system is not a Linux system.

The images generated by each operating system need to be fused and then provided to the display screen 72 for displaying an entire interface on the display screen 72 at the same time. How the display interface on display screen 72 is generated in the first and second display modes is described in detail below.

The first instrument images are generated under control of the first operating system in the first display mode. The first operating system generates a first instrument images based on the received instrument information. The instrument information may also be referred to as "instrument data", for example, in the form of data within the control unit 71. In fact, the instrument information generally refers to information related to the body of motorcycle 100, sometimes also known as "motorcycle body information". The first instrument images generated under control of the first operating system are located on at least one layer.

The first entertainment images mentioned above are also generated under control of the first operating system. The first operating system generates the first entertainment images based on entertainment data. In the present application, entertainment data may be provided by the second operating system. In fact, some of the entertainment data can be provided in real-time by the second operating system, such as the entertainment data required to generate the simplified entertainment images 782. Another portion of the entertainment data (such as the entertainment data required to generate the entertainment shortcut icons 781) can be pre-stored in a storage space of the control unit 71 as it does not change frequently, without the need to be provided in real time by the second operating system. In this way, after the centralized control system 70 is started, the first display interface in the first display mode can be generated entirely based on the first operating system. The first display interface may not include the simplified entertainment images 782, so all images can be generated without real-time entertainment data provided by the second operating system. In other words, the first display interface can be displayed without waiting for the second operating system to run. The entertainment application status icons 784 are turned off until the second operating system runs. The first operating system may obtain the entertainment application status icons 784 based on a pre-stored entertainment data. After the second operating system runs, the first operating system controls the generation of entertainment application status icons 784 based on real-time entertainment data provided by the second operating system after the state changes. The first entertainment image generated is located on at least one layer. For clarity of expression, a layer where the first instrument images are located is defined as a first layer, and the layer where the first entertainment images are located is defines as a second layer. It can be seen that both the first layer and the second layer are generated under control of the first operating system. Both the first layer and the second layer may be one or a plurality of layers.

It can be seen that both the instrument images 750 and the entertainment images 780 are generated under control of the first operating system in the first display mode. In an alternative embodiment, all images displayed on the display screen 72 are generated under control of the first operating system in the first display mode.

The first instrument images and the first entertainment images can be generated through graphical rendering.

The first layer and the second layer are fused to generate the first display interface, which is the display interface in the first display mode. The fusion of the first layer and the second layer is completed under control of the first operating system.

In order to ensure that all images in the first display interface can be clearly provided to users for viewing, the images in the first layer and the images in the second layer should not be obstructed from each other. For example, the images in the first layer occupies a portion of the entire interface, which includes one or a plurality of blank areas in addition to the occupied areas. The images in the second layer are arranged in the blank areas mentioned above in the display interface. Thus, the images in the first layer and the images in the second layer are displayed in each area of the first display interface by overlaying the first layer and the second layer. It should be noted that overlaying images up and down to produce special visual effects does not constitute a situation where images are occluded each other.

Further, the first display interface is sent to the display screen 72 for display under control of the first operating system.

At least some of the instrument images 750 and at least some of the entertainment images 780 are generated under control of the first operating system and at least another some of the instrument images 750 and at least another some of the entertainment images 780 are generated under control of the second operating system in the second display mode.

In one embodiment, the second instrument images are generated under control of the first operating system. Similar to the first display mode, the first operating system generates the second instrument images based on the received instrument information. For clarity of expression, a layer where the second instrument images are located is defined as a layer 1. The layer 1 may be one layer or a plurality of layers.

The at least some of the second entertainment images are generated under control of the second operating system. The portion of the second entertainment images generated under control of the second operating system may include complete entertainment images 785, and may also include a simplified entertainment image 782. All the images within the right side of the middle area 728 in FIG. 7 may be generated under control of the second operating system. In an alternative embodiment, the portion of the second entertainment images mentioned above may be generated under control of the first operating system, such as the entertainment function status icons 784. The top area 727 in FIG. 7 may include both the motorcycle status icons 751 and the entertainment application status icons 784. All the images within the top area 727 may be generated under control of the first operating system, and the layer where these images are located is defined as a layer 3. In addition, in some embodiments, the entertainment shortcut icons 781 in the right side of the bottom area 729 in FIG. 7 may be generated under control of the first operating system. In other embodiments, the entertainment shortcut icons 781 may be generated under control of the second operating system. A plurality of layers may be generated under control of the second operating system. The second operating system may provide the plurality of layers to the first operating system directly, or provide a fused layer to the first operating system. In the case that the second operating system provide a fused layer to the first operating system, the plurality of layers generated under control of the second operating system are fused to a fused layer.

The second instrument images and the second entertainment images can be generated through graphical rendering.

FIG. 11 is a schematic diagram of the layer fusion principle in the second display mode in the embodiment of the present application. As shown in FIG. 11, the Layer 1, Layer 2, and Layer 3 are fused to generate a second display interface, which is the display interface in the second display mode. The layer fusion between the layers provided by the first operating system (such as Layer 1 and Layer 3) and the layers provided by the second operating system (a plurality of layers, or Layer 2 obtained by fusing a plurality of layers) is completed under control of the first operating system.

Similar to the first display mode, the positions of each image in Layer 1, Layer 2, and Layer 3 are different in the corresponding layers. Therefore, each image is not obstructed from each other to ensure that each image in the second display interface can be clearly seen by the user. FIG. 12 is a schematic diagram of a second display interface formed by layer fusion in the second display mode in an embodiment of the present application. As shown in FIG. 12, the dashboard images (images provided by the first operating system) and the Android images (images provided by the second operating system) are fused to generate a complete display interface.

In the display interface shown in FIG. 10, images related to motorcycle information are displayed in the second entertainment display area, but these images are supported by the entertainment application, which provides options for displaying these images. Correspondingly, these images are generated under control of the second operating system, based on instrument data provided by the first operating system.

In an alternative embodiment, the images generated under control of the second operating system are displayed in a form of negative screen and/or floating window in the second entertainment display area.

Therefore, some second entertainment images may also be generated under control of the first operating system in the second display mode, for example, the entertainment shortcut icons 781. The first operating system generates some of the first entertainment images described above. The entertainment data may be provided in real-time by the second operating system. Alternatively, the entertainment data may be pre- stored in the storage space of the control unit 71.

Both the first operating system and the second operating system are running in the second display mode.

Further, the second display interface is sent to the display screen 72 for display under control of the first operating system.

The similarities between the first display and the second display modes are that the display interface of the display screen 72 is generated by fusing at least one layer of the instrument images 750 and at least one layer of the entertainment images 780 through layer fusion under control of the first operating system in both the first and second display modes and the display interface of the display screen 72 is sent to the display screen for display under the control of the first operating system in both the first display mode and the second display mode.

It should be noted that the first operating system and second operating system are independently of each other, but their respective images are fused through layer fusion to generate a complete display interface displayed on the display screen 72. Due to the differences in the requirements for instrument display and entertainment display in motorcycle 100, using two different operating systems to control the instrument and entertainment applications can avoid the problem of low system efficiency caused by excessive load on a single system, and also avoid the problem of a single system being unable to meet the personalized requirements for instrument display and entertainment display.

The control unit 71 needs to have corresponding hardware support to run at least two operating systems mentioned above. The control unit 71 has at least two processing kernels including a first processing kernel 711 and a second processing kernel 712. The first operating system runs on the first processing kernel 711, and the second operating system runs on the second processing kernel 712. In addition, the control unit 71 may further include a first storage space 716, a second storage space 717, a third storage space 718, a graphics blend module 713, and the like.

In fact, the control unit 71 includes, for example, System on Chip (SoC) 710 and a plurality of storage spaces. In addition, the control unit 71 may further include a Microcontroller unit (MCU). Please refer to the structural schematic diagram of the control unit shown in FIG. 13.

As shown in FIG. 13, the plurality of storage spaces may include the first storage space 716, the second storage space 717, and the third storage space 718 aforementioned.

At least two processing kernels and the aforementioned graphics blend module 713 may be located in the SoC chip 710. The first processing kernel 711 and the second processing kernel 712 may also be referred to as a kernel B and a kernel A. The first storage space 716 and the second storage space 717 may be respectively connected to the SoC chip 710, and the first storage space 716 corresponds to the first processing kernel 711 (or to the first operating system) for storing data based on control of the first operating system. The second storage space 717 corresponds to the second processing kernel 712 (or to the second operating system) for storing data based on control of the second operating system.

FIG. 14 is a schematic diagram of an electronic architecture driving the display screen in an embodiment of the present application. As shown in FIG. 14, in order to synchronize the operation of the first operating system and second operating system, the first processing kernel 711 running the first operating system can be selected as the main processing kernel, which is responsible for managing the startup timing of the entire centralized control system 70.

In an alternative embodiment, the first processing kernel 711 runs the FreeRTOS system, and the second processing kernel 712 runs the Android system. The first operating system needs to run in real-time to avoid interruptions during the motorcycle 100 is running. The FreeRTOS system running on the first processing kernel 711 has the advantages of stability, safety, and not being prone to crashes. Therefore, as the main processing kernel, the first processing kernel 711 can ensure real-time acquisition of instrument data, thereby ensuring driver driving safety. The Android system running on the second processing kernel 712 can support rich and intelligent entertainment applications, which is difficult for the FreeRTOS system to achieve. However, there is a risk of crashes during the use of the Android system. If the second processing kernel 712 running the Android system is used as the main processing kernel, there may be a situation where the display screen 72 crashes during driving, posing a hidden danger to safe driving,

The first processing kernel 711 serves as the main processing kernel to control the graphics blend module 713.

In fact, the images generated under control of the first operating system are stored in a first storage space 716, and the images generated under control of the second operating system are stored in a second storage space 717. The steps of storing images can also be controlled by the corresponding operating system. The steps of storing images can be achieved through a virtual graphics driver. For example, the first operating system running on the first processing kernel 711 stores the generated first instrument images in the first storage space 716 through a virtual graphics driver.

The above graphics blend module 713 is used to stack and fuse the images stored in the first storage space 716 (in the form of layers) according to a predetermined stacking logic to generate the first display interface in the first display mode, and store the first display interface in the third storage space 718. The above graphics blend module 713 is used to stack and fuse the images stored in the first storage space 716 and the second storage space 717 (in the form of layers) according to a predetermined stacking logic to generate the second display interface in the second display mode.

The first operating system running on the first processing kernel 711 is used to control the display unit to obtain the first display interface or second display interface stored in the third storage space 718. The first display interface or the second display interface is sent to the display screen 72 for display under control of the first operating system.

The first display interface or the second display interface can be output from the video output interface (such as HDMI) to the display screen 72 through LVDS (Low-Voltage Differential Signaling) video output, driving the display screen 72 to display, achieving the first display mode or the second display mode.

The layer fusion herein can be achieved through the graphics blend module 713, which is more efficient than the layer fusion through software.

It should be noted that although in the above embodiments, the first processing kernel 711 and the second processing kernel 712 are located in the same SoC chip 710, but the present application embodiment does not exclude the case where the two are located in different chips.

The first storage space 716 and the second storage space 717 may be the same physical memory for data communication through memory sharing. The same physical memory is mapped to the process address spaces of the second operating system and the first operating system, achieving mixed unit memory sharing between the first operating system and the second operating system. The first operating system can view updates made by the second operating system in real time to data sharing, and vice versa. Some synchronization mechanisms are required, such as mutexes or semaphores because multiple systems and units shares the same memory area. The SoC chip 710 has one or a plurality of storage interfaces (Memory I/F) 714. The first operating system and the second operating system are capable of transmitting data to the first storage space 716 and the second storage space 717 through the storage interface 714.

One obvious benefit of using memory sharing communication is high efficiency, as the first operating system and second operating system can directly read and write (such as direct read and write) to memory, such as the first storage space 716 and the second storage space 717. Memory sharing only copies data twice: one from the input file to the memory shared area, and the other from the memory shared area to the output file. In fact, it is not always necessary to un-map after reading and writing a small amount of data and to re-establish a memory sharing area if a new communication occurs; instead, always maintain the shared area until communication is completed when sharing memory between the first and second operating systems. In this way, the data is always saved in the memory share and is not written back to the file. The content in the memory share is often written back to the file only when it is unmapped. Therefore, memory sharing communication can achieve high efficiency and save data storage resources.

The FreeRTOS system may also be running on MCU 715, which is used for management and control, such as power management. MCU 715 is electrically connected to SoC chip 710.

The first operating system running on the first processing kernel 711 and the second operating system running on the second processing kernel 712 require certain data interaction during their operation. The interactive information includes not necessarily limited to: instrument information, centralized control system information, CAN messages, time information, and diagnostic information.

Alternatively, the RPC remote procedure call framework is used for process communication between the first processing kernel 711 and the second processing kernel 712. RPC (Remote Procedure Call) is a method of requesting services from remote computer programs over a network without the need to understand underlying network technology. In some embodiments of the present application, the process on the first processing kernel 711 calls the process on the second processing kernel 712. The calling process on the first processing kernel 711 is suspended, while the called process on the second processing kernel 712 begins execution. When the value is returned to the first processing kernel 711, then the first processing kernel 711 process continues to execute, and vice versa. The caller can pass the information to the called party by using parameters, and then obtain the information through the returned results. The RPC remote procedure call framework is used for process communication between the first processing kernel 711 and the second processing kernel 712, which can prevent the first processing kernel 711 and the second processing kernel 712 from seizing resources and can coordinate the processes between the first processing kernel 711 and the second processing kernel 712.

As an example, the user sets language options on the second operating system of the second processing kernel 712. This setting information is synchronously transmitted to the first operating system on the first processing kernel 711 through a communication protocol, achieving synchronous updates of the system language and further transmitting this to the display screen 72.

The image transmission between the first processing kernel 711 and the second processing kernel 712 is achieved not only through memory sharing, but also through such as virtual IO mechanism.

The graphics refresh rate of the first processing kernel 711 and the graphics refresh rate of the second processing kernel 712 may be set according to the display requirements of the driving device. The graphics refresh rate of the first processing kernel 711 is greater than or equal to the graphics refresh rate of the second processing kernel 712. Alternatively, the graphics refresh rate of the first processing kernel 711 is 60 fps, and the graphics refresh rate of the second processing kernel 712 may be 60 fps or 30 fps. It should be noted that the graphics refresh rate of the first processing kernel 711 refers to the graphics refresh rate of the first operating system. Similarly, the graphics refresh rate of the second processing kernel 712 refers to the graphics refresh rate of the second operating system.

It should be noted that the centralized control system 70 provided in this application is not necessarily limited to the motorcycle 100 in the embodiments herein, and may be applied to other driving equipments. These will all fall into the scope of the present application. The centralized control system 70 may be applied to any type of real or virtual driving equipments. The driving equipment above may include but not necessarily limited to motorcycles, motorboats, tractors, passenger cars, airplanes, airships, and the like.

The centralized control system 70 can provide users with richer and more convenient usage applications and human-machine interaction methods based on the above electronic architecture of control unit 71.

The centralized control system 70 can provide various entertainment applications including at least navigation application, multi-media application, driver assistance application, voice control application, and interconnection network application, and the like.

The navigation applications may be an existing navigation application not be described herein.

The multi-media applications include but not necessarily limited to radio playback, playback of audio or video files stored in internal or external memory devices, game play. The external memory devices include, for example, a USB flash drive plugged into the motorcycle 100, a mobile terminal 200 wirelessly connected to the motorcycle 100, and the like. Correspondingly, the motorcycle 100 has a socket 65 for USB flash drive insertion, which may be located on the manipulation system 60, for example but not necessarily limited to this. Mobile terminal 200 may include a mobile phone 201 and a wearable device 202. The control unit 71 is also used to control the display screen 70 to play multi-media files stored in internal or external memory devices.

The control unit 71 is also used to control display screen 72 to pause providing video file playback images and to pause game images to users during the motorcycle 100 is driving in order to ensure driving safety. As an alternative embodiment, the video file playback function and game-playing function are disabled for users during the running of the motorcycle 100. The video file playback function and the game-playing function are allowed for users when the motorcycle 100 is not in a running state. As another alternative embodiment, the video file playback function and game-playing function are allowed for users during the motorcycle 100 is driving, but the corresponding images are not displayed on display screen 72.

The centralized control system 70 also supports auxiliary driving functions. As an alternative embodiment, the centralized control system 70 is capable of receiving camera files from the camera component 81 mounted on the frame 10 and controlling the display screen 72 to display the camera files under control of the control unit 71. The centralized control system 70 is further capable of receiving radar data from the radar component mounted on the frame 10, and controlling the display screen 72 to send an alarm to the user under control of the control unit 71, the alarm may be in the form of images and/or sounds. In addition, the centralized control system 70 is capable of fusing the received camera file and radar data, and is capable of controlling the display screen 72 to play the fused information to the user under control of the control unit 71.

The centralized control system 70 is capable of directly receiving audio information or receiving audio information through external devices such as wearable device 202. The control unit 71 is capable of recognizing audio information locally or through a cloud server 300 to generate corresponding control command.

The centralized control system 70 is interconnected with the mobile terminal 200. As mentioned above, the mobile terminal 200 may include a mobile phone 201, a wearable device 202, and the like. The interconnection methods between the centralized control system 70 and the mobile terminal 200 include but not necessarily limited to through Bluetooth. The centralized control system 70 is capable of performing data interaction with the mobile terminal 200 and projecting the content displayed on the mobile terminal 200 onto the display screen. In addition, some applications supported on the mobile terminal 200 can be mapped to the display screen 72, and the display screen 72 can be used as an input device and/or output device to achieve corresponding functions, such as answering or calling phone calls.

The centralized control system 70 can also provide a new user guidance to guide the new user to use the various functions. The control unit 71 controls the display screen 72 to display a new user guidance icon, and when the control command for the new user guidance icon is triggered, the control display screen 72 displays the methods of using the various functions to the new user.

The centralized control system 70 is further capable of providing a plurality of setting functions for various components of the motorcycle 100. The setting functions may include but not necessarily limited to setting driving mode, setting direction manipulation component temperature, setting seat temperature, setting audio channel, setting display screen brightness, setting sound volume, and the like. It should be noted that some of the above setting functions may also be provided on the existing motorcycles, but they are mainly based on the hard buttons located on motorcycles. Users can only set them through the hard buttons one by one, which is extremely inconvenient to use and may cause problems of low efficiency response. Some hard buttons are used frequently and have a risk of damage and failure. It should be noted that the centralized control system 70 can enable various setting functions on one display interface of the display screen 72, making it convenient to use. In an alternative embodiment, the centralized control system 70 provides setting functions for various components of the motorcycle 100, which can be implemented by the second operating system, such as providing setting functions through the Android system, which improves response speed.

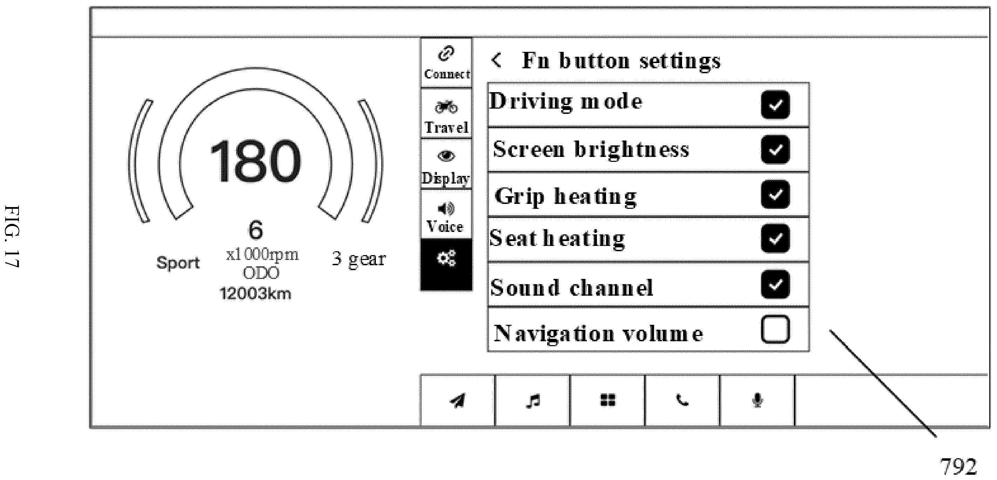

The centralized control system 70 is capable of saving and calling of various setting conditions input by the user. In some embodiments, the control display screen 72 displays a first icon, which is used to indicate whether the user saves the above input content when receiving input content for the setting functions. In addition, the controlized display screen 72 displays a second icon which is used to indicate whether the user uses the default name to correspond to the input content mentioned above, or a new name can be input to correspond to the input content mentioned above. The above input content can be set for one function or for a plurality of functions. The control display screen 72 displays images corresponding to the saved input content to the user, such as displaying default or newly named images when receiving instructions from the user to use the settings. Upon receiving the user control command for the images, the first function control command is output, which is used to instruct the corresponding components of the motorcycle 100 to complete functional adjustments corresponding to the above input content. The display images corresponding to the above settings can be displayed in the display interface of display screen 72 in the form of a floating window (please refer to the floating window 792 in FIG. 17). In an alternative embodiment, the images corresponding to the above settings are displayed in the second entertainment display area in the second display mode to avoid obstructing the display of instrument images.

The human-machine interaction methods supported by the centralized control system 70 will be described in detail below.

Users can control the centralized control system 70 through touch control for the display screen 72, voice control, and operation for the operation controls in the manipulation system 60.

In some embodiments, control of the centralized control system 70 is achieved through touch control for the display screen 72. The display screen 72 is a touch screen and includes an LCD screen and a touch cover plate covering the LCD screen. The touch control for the display screen 72 is achieved by touching the touch cover plate. In addition, the display screen 72 also supports fingerprint recognition, iris recognition, and the like. The central control system 70 is unlock through fingerprint recognition or iris recognition. As described above, if it is detected that the motorcycle 100 is driving during the switching process between the first and second display modes, the touch function of the display screen 72 is locked. In fact, the touch function of the display screen 72 can be disabled based on the control unit 71 (in a non-touch state) during the running of the motorcycle 100 to ensure driving safety. The touch control function of the display screen 72 is enabled based on the control unit 71 and the display screen 72 is in a touch controllable state when the motorcycle 100 stops driving.

Voice control function can be enabled after the centralized control system 70 is started and is turned off when the centralized control system 70 is turned off. During the activation of the centralized control system 70, if it is detected that the centralized control system 70 is on the phone, the voice control function will be disabled. In an alternative embodiment, the functions that the centralized control system 70 achieved through touch control or through operation controls may also be achieved through voice control. Regarding the voice control and other related content, please refer to the description above.

Control of the centralized control system 70 may also be achieved through the operation of the operation controls in the manipulation system 60. A plurality of operation controls, such as buttons, knobs, toggle keys, or the like are arranged in the manipulation system 60 of the motorcycle 100. When at least one of the plurality of operation controls is operated, the centralized control system 70 can receive control command and execute corresponding operations based on the control command. These operation controls are referred to as centralized operation controls 64. It should be noted that the centralized control system 70 supports various functions, some of which are frequently used or needs to respond to the request of user, so the requirement of real-time is very high. Human-machine interaction with the centralized control system 70 can be conveniently and efficiently achieved by operating the centralized operation controls 64. Therefore, in some embodiment of the present application, the manipulation system 60 is not only used to control the operation of the motorcycle 100, but also capable of controlling the operation of the centralized control system 70 by operating the centralized operation controls 64. As mentioned above, users can control the centralized control system 70 by operating the centralized operation controls 64 due to the touch function of the display screen 72 being turned off during motorcycle 100 is driving.

The operations for the centralized operation controls 64 may include a general press, a long press, and a continuous press. The general press is defined as a first time length press. The first time length press is an instant press that immediately lifts up after being pressed. The long press is defined as a second time length press that requires holding for a time length, such as 1 second. The continuous compression is defined as a third time length press that requires holding for a longer time length, such as 10 second. The third time length is greater than the second time length, and the second time length is greater than the first time length. In addition, the operation of the centralized operation controls 64 may further include pressing two buttons simultaneously, rotating, and toggling. It should be noted that this application does not exclude pressing three or more buttons simultaneously.

FIG. 15 is a schematic diagram of the structure of some centralized operation controls in an embodiment of the present application. As shown in the FIG. 15, the centralized operation controls 64 may include a first operation control 641, a second operation control 642, a third operation control 643, a fourth operation control 644, a fifth operation control 645, a sixth operation control 646, and a seventh operation control 647.

The first operation control 641, the second operation control 642, the third operation control 643, and the fourth operation control 644 are respectively the upper operation control, the lower operation control, the left operation control, and the right operation control, which may also be referred to as the upper button, the lower button, the left button, and the right button, respectively. All the four operation controls are three-cornered, with each vertex pointing in a different direction. This allows users to easily determine their functions based on the shape. For example, they may switch options through the upper operation control and the lower operation control, and may adjust the voice volume through the left operation control and the right operation control. As mentioned above, the first control command received by the centralized control system 70 may include a control command through operating a certain operation control in the manipulation system 60. In one embodiment, the first control command can be received through the left operation control and the right operation control.

A fifth operation control 645 located in the middle can enable or disable voice control, which may be referred to as a voice button. A motorcycle voice assistant for achieving voice control of the centralized control system 70 is displayed on the display screen 72 when the user presses the voice button 645. When the centralized control system 70 is connected to the mobile terminal 200, if the voice button is pressed, it will receive audio information based on the mobile terminal 200. The operation control may be, such as a center button.

A sixth operation control 646 located on the lower-left of the screen can call out the negative screen 791 and/or floating window 792, providing convenience for users to quickly view motorcycle information and to use settings. The sixth operation control 646 may be referred to as a Fn button. Calling out of the negative screen 791 or floating window 792 can be achieved through different operations on the sixth operation control 646. In some embodiments, a floating window 792 is called out on the display screen 72 in response to the centralized control system 70 receiving a control command corresponding to a first time length pressing on the sixth operation control 646. A negative screen 791 is called out on the display screen 72 in response to the centralized control system 70 receiving a control command corresponding to a second time length pressing on the sixth operation control 646. The second time length is different from the first time length. As an example, the control unit 71 controls the display screen 72 to display the floating window 792 when the sixth operation control 646 receives a general time length press and to display the negative screen 791 when the sixth operation control 646 receives a long time length press.

In these embodiments, the negative screen 791 and floating window 792 can be called out only in the second display mode, for example. The control unit 71 cannot perform any operation when the centralized operation control 64 receives a control command from the sixth operation control 646 (such as a control command corresponding to a pressing on the Fn button) in the first display mode. The user's press is considered invalid. The shape of the sixth operation control 646 is different from other operation controls, which is beneficial for users to quickly distinguish. In one embodiment, the shape of the sixth operation control 646 may be rectangle. In another embodiment, the sixth operation control 646 may be a rectangle with rounded corners.

The centralized operation control 64 may be located around the direction manipulation component 61 (as shown in FIG. 1) in order to facilitate the driver to control the above operation controls while ensuring driving safety. In the case where the direction manipulation component 61 is a grip assembly, the centralized operation controls 64 may be located around the left grip 611 or around the right grip 612. The distance between the centralized operation controls 64 and the direction manipulation component 61 (left grip 611 or right grip 612) shall not exceed 25 centimeters. Alternatively, the distance between the two may be shorter than 10 centimeters.

As an example, the operation of the centralized operation controls 64 is described below.

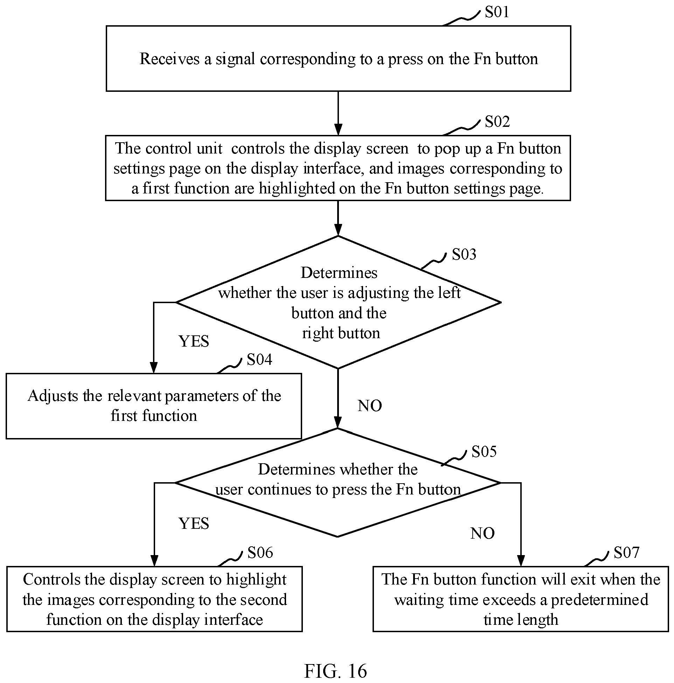

FIG. 16 is a flowchart illustrating a method for operating the centralized operation control in an embodiment of the present application. As shown in FIG. 16,
in step S01, the centralized operation control 64 receives a signal corresponding to a press on the Fn button and transmits the signal to the control unit 71, and
in step S02, the control unit 71 controls the display screen 72 to pop up a Fn button settings page on the display interface, and images corresponding to a first function is highlighted on the Fn button settings page.

This settings page corresponds to the floating window 792 for setting various components of the motorcycle 100 mentioned above. Please refer to FIG. 17, the display screen 72 displays various functions that can be set. Examples may include driving mode, screen brightness, grip heating, seat cushion heating, sound channel, and navigation volume. The corresponding option box can have two states: checked or unchecked. Alternatively, from top to bottom, setting a driving mode is referred to as a first function, and setting a display screen brightness is referred to as a second function.

Heating the grip assembly is an alternative example of setting the direction manipulation component 61 temperature as mentioned above. Similarly, heating the seat cushion is an alternative example of setting the seat 50 temperature as mentioned above. Setting screen brightness corresponds to an alternative example of the display screen 72 brightness. Setting a navigation sound volume is an alternative example of setting sound volume as mentioned above.
In step S03, determine whether the user is adjusting the left button and the right button;
In step S04, if the user is adjusting the left button and the right button, then adjust the relevant parameters of the first function;
In step S05, if the user is not adjusting the left button and the right button, determine whether the user continues to press the Fn button;
In step S06, if the user continues to press the Fn button, the control component 71 controls the display screen 72 to highlight the images corresponding to the second function on the display interface;

Repeat steps S03- S06.

In step S07, if the user no longer presses the Fn button, the Fn button function will exit when the waiting time exceeds a predetermined time length. The predetermined time length may be for example 3-5 seconds.

In summary, the control unit 71 receives control command from the user based on at least some centralized control controls 64, and controls the display screen 72 to display images corresponding to the setting function based on the received control command. The control command in step S01 is referred to as a second control command, for example received through the sixth operation control 646. Referring to step S02, the second control command is used to call out the display interface corresponding to the setting function (such as calling out floating window 792). In addition, referring to steps S03-S06, the control command of steps S03-S06 is referred to as a third control command. The third control command is received, for example, through the sixth operation control 646, the third operation control 643, and the fourth operation control 644. The third control command is used to set various settings in the setting functions. In an alternative embodiment, at least one setting item is set based on the third operation control 643 and the fourth operation control 644. In addition, which setting item in each setting item is in a settable state may be switched through the sixth operation control 646.

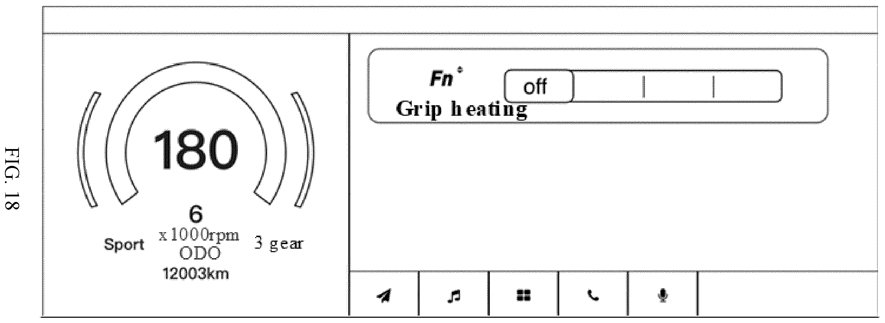

FIG. 18 is a schematic diagram of the display interface for setting the grip heating function. As shown in FIG. 18, this schematic diagram indicates that when the images corresponding to heating of the grip assembly are highlighted, if a signal corresponding to adjusting the left and right buttons by user, then the control display screen 72 will display this display interface. Under this display interface, the operation of adjusting the left and right buttons will be displayed in the corresponding images on the display screen 72.

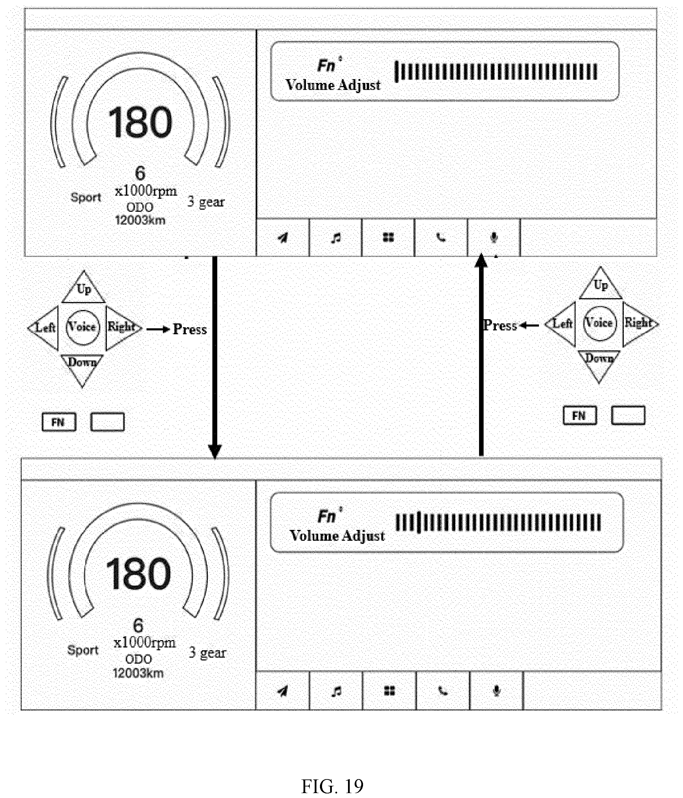

FIG. 19 is a schematic diagram of the display interface for setting the volume adjustment function. As shown in FIG. 18, this schematic diagram indicates that when the images corresponding to volume adjustment are highlighted, if a signal corresponding to adjusting the left and right buttons by user, then the control display screen 72 will display this display interface. If a signal is received that the user is pressing the right button, the volume will be increased, and the display interface of display screen 72 is shown in the bottom of FIG. 19. On the contrary, if a signal is received that the user is pressing the left button, the volume will be turned down, and the display interface of display screen 72 is shown in the top of FIG. 19.

In addition, a seventh operation control 647 may be a custom operation control, specifically a custom button, which has corresponding signal transmission functions based on user customized settings.

It should be noted that in the embodiment of this application, by adding a centralized operation control 64 to the manipulation system 60 of the motorcycle 100, it can be more convenient and efficient to control the centralized control system 70. The driver does not need to touch the display screen 72 during the running of the motorcycle 100, thereby ensuring driving safety. It should be noted that the operation controls of the centralized operation control 64 shown in FIG. 15, including, as well as the control method and corresponding display interface shown in FIGS. 16 to 19, are only for illustrative purposes and should not be construed as limiting the present application.

It should be noted that the specific embodiments described here are only used to explain this application, not to limit it. According to the embodiments provided in this application, all other embodiments obtained by ordinary technical personnel in this field without engaging in creative labor fall within the scope of protection of this application.

Obviously, the accompanying drawings are only some examples or embodiments of the present application. For ordinary technical personnel in this field, they can also apply the present application to other similar situations based on these drawings, without the need for creative labor. Furthermore, it should be noted that although the work done in this development process may be complex and lengthy, for ordinary technical personnel in the field, certain design, manufacturing, or production changes made based on the technical content disclosed in this application are only routine technical means and should not be considered as insufficient disclosure of the content disclosed in this application.

The above embodiments only express several embodiments of the present application, and their descriptions are more specific and detailed, but cannot be understood as limiting the scope of patent protection.

Therefore, the scope of protection of this application should be based on the attached claims.

## Claims

1. A motorcycle comprising
a frame;
a plurality of wheels comprising at least one front wheel and at least one rear wheel;
a suspension system comprising a front suspension and a rear suspension, the at least one front wheel being connected to the frame through the front suspension, and the at least one rear wheel being connected to the frame through the rear suspension;
a power system disposed on the frame for providing power to the motorcycle, the at least one of the front wheel and the rear wheel being connected to the power system in a transmission mode;
at least one seat disposed on the frame; and
a manipulation system for manipulating the running of the motorcycle;
wherein the motorcycle further comprises a centralized control system comprising a control unit and a display screen, the display screen is disposed adjacent to the manipulation system and in front of the at least one seat; at least two operating systems are running in the control unit; and the at least two operating systems comprise a first operating system and a second operating system; the control unit is capable of controlling the display screen to display one or a plurality of instrument images and one or a plurality of entertainment images in at least two different and switchable display modes based on the at least two operating systems; the at least two different and switchable display modes comprise a first display mode and a second display mode; the instrument images and the entertainment images displayed on the display screen are both generated under control of the first operating system and an area occupied by the instrument images on the display screen is greater than an area occupied by the entertainment images on the display screen in the first display mode; at least some of the instrument images and at least some of the entertainment images are generated under control of the first operating system and at least another some of the instrument images and at least another some of the entertainment images are generated under control of the second operating system in the second display mode and an area occupied by the instrument images on the display screen is less than or equal to an area occupied by the entertainment images on the display screen in the second display mode.

2. The motorcycle of claim 1, wherein the manipulation system comprises a direction manipulation component comprising a left grip, a right grip, and handlebars for connecting the left grip and the right grip; the display screen and the handlebars both intersect with a longitudinal mid-plane of the at least one seat in a left-right direction; the display screen is located at one of the following positions: a front side of the handlebars further away from the seat(s), a rear side of the handlebars closer to the seat(s), and a position above the handlebars.

3. The motorcycle of claim 1, wherein the motorcycle comprises only one display screen.

4. The motorcycle of claim 1, wherein the instrument images are at least used to show motorcycle driving information and motorcycle status information; the entertainment images are at least used to show one or a plurality of running entertainment applications and/or one or a plurality of entertainment applications supported to be run, the entertainment applications are selected from at least one of the group consisting of
navigation application, multi-media application, driver assistance application, voice control application, and interconnection network application.

5. The motorcycle of claim 1, wherein a ratio of a diagonal length of the display screen to a distance from a front wheel center to a rear wheel center is in the range from 0.11 to 0.3.

6. The motorcycle of claim 1, wherein the manipulation system comprises a direction manipulation component; and a ratio of the diagonal length of the display screen to a distance between two most distal ends of the direction manipulation component is in the range from 0.19 to 0.52.

7. The motorcycle of claim 1, wherein when the motorcycle is parking on an horizontal plane with the front and rear wheels as support points, an angle between the display screen and the horizontal plane is in the range from 20° to 70°.

8. The motorcycle of claim 1, wherein the control unit is capable of controlling the display screen to display the images in the first display mode firstly and then display the images in the second display mode after the display screen is activated.

9. The motorcycle of claim 1, wherein a ratio of the area occupied by the instrument images on the display screen to the area occupied by the entertainment images on the display screen is in the range from 3 to 20 in the first display mode.

10. The motorcycle of claim 1, wherein the entertainment images displayed on the display screen only comprises an entertainment shortcut icon in the first display mode.

11. The motorcycle of claim 1, wherein a display interface of the display screen comprises
a first instrument display area for displaying at least some of the instrument images;
a first entertainment display area for displaying at least some of the entertainment images; and
a switchable display area for displaying some of the instrument images and/or some of the entertainment images in the first display mode;
the control unit is capable of controlling the switchable display area of the display screen to switch from a first display picture to a second display picture when the centralized control system receives a first control command in the first display mode; wherein the entertainment images displayed on the display screen comprise one or a plurality of entertainment shortcut icons and one or a plurality of simplified entertainment images in the first display mode; the entertainment shortcut icons are displayed in the first entertainment display area; and the simplified entertainment images are displayed in the switchable display area.

12. The motorcycle of claim 1, wherein the entertainment images displayed on the display screen comprise the entertainment shortcut icons in both the first display mode and the second display mode; and the number of the entertainment shortcut icons displayed in the second display mode is greater than or equal to that of the entertainment shortcut icons displayed in the first display mode.

13. The motorcycle of claim 1, wherein the control unit is further used to control the display screen to display a negative screen and/or a floating window in the second display mode; wherein the display interface of the display screen further comprises a second instrument display area and a second entertainment display area; and the negative screen and/or the floating window are displayed in the second entertainment display area.

14. The motorcycle of claim 1, wherein the control unit is capable of controlling the display screen to switch from the first display mode to the second display mode when the centralized control system is activated and the second operating system automatically starts running; or base on a first predetermined command of the control unit; or when the control unit detects a control command for the entertainment shortcut icons in the display interface of the display screen in the first display mode; or when the control unit detects a first display mode switching command.

15. The motorcycle of claim 1, wherein the control unit is capable of controlling the display screen to switch from the second display mode to the first display mode based on an operating state of the second operating system; or base on a second predetermined command of the control unit; or when the control unit detects a second display mode switching command.

## Patentansprüche

1. Motorrad, umfassend
einen Rahmen;
eine Mehrzahl von Rädern, umfassend mindestens ein Vorderrad und mindestens ein Hinterrad;
ein Aufhängungssystem, umfassend eine Vorderradaufhängung und eine Hinterradaufhängung, wobei das mindestens eine Vorderrad über die Vorderradaufhängung mit dem Rahmen verbunden ist, und das mindestens eine Hinterrad über die Hinterradaufhängung mit dem Rahmen verbunden ist;
ein Antriebssystem, das am Rahmen angeordnet ist und zur Bereitstellung von Antriebskraft für das Motorrad dient, wobei mindestens eines des Vorderrads und des Hinterrads im Übertragungsmodus mit dem Antriebssystem verbunden ist;
mindestens einen Sitz, der am Rahmen angeordnet ist; und
ein Bedienelement zur Steuerung der Fahrbewegung des Motorrads;
wobei das Motorrad ferner ein zentrales Steuersystem umfasst, das eine Steuereinheit und einen Anzeigebildschirm umfasst, wobei der Anzeigebildschirm benachbart zum Bedienelement und vor dem mindestens einen Sitz angeordnet ist; mindestens zwei Betriebssysteme in der Steuereinheit laufen; und die mindestens zwei Betriebssysteme ein erstes Betriebssystem und ein zweites Betriebssystem umfassen; die Steuereinheit in der Lage ist, den Anzeigebildschirm so zu steuern, dass dieser ein oder mehrere Instrumentenbilder und ein oder mehrere Unterhaltungsbilder in mindestens zwei unterschiedlichen und umschaltbaren Anzeigemodi basierend auf den mindestens zwei Betriebssystemen anzeigt; die mindestens zwei unterschiedlichen und umschaltbaren Anzeigemodi einen ersten Anzeigemodus und einen zweiten Anzeigemodus umfassen; im ersten Anzeigemodus die auf dem Anzeigebildschirm angezeigten Instrumentenbilder und Unterhaltungsbilder beide unter Steuerung des ersten Betriebssystems erzeugt werden und ein Bereich, der von den Instrumentenbildern auf dem Anzeigebildschirm eingenommen wird, größer ist als ein Bereich, der von den Unterhaltungsbildern auf dem Anzeigebildschirm eingenommen wird; im zweiten Anzeigemodus mindestens einige der Instrumentenbilder und mindestens einige der Unterhaltungsbilder unter Steuerung des ersten Betriebssystems erzeugt werden und mindestens einige weitere der Instrumentenbilder und mindestens einige weitere der Unterhaltungsbilder unter Steuerung des zweiten Betriebssystems erzeugt werden und im zweiten Anzeigemodus ein Bereich, der von den Instrumentenbildern auf dem Anzeigebildschirm eingenommen wird, kleiner oder gleich dem Bereich ist, der von den Unterhaltungsbildern auf dem Anzeigebildschirm eingenommen wird.

2. Motorrad nach Anspruch 1, wobei das Bedienelement ein Richtungsbedienelement umfasst, das einen linken Griff, einen rechten Griff und einen Lenker zur Verbindung des linken Griffs und des rechten Griffs umfasst; der Anzeigebildschirm und der Lenker sich beide mit einer Längsmittelebene des mindestens einen Sitzes in Links-Rechts-Richtung schneiden; der Anzeigebildschirm sich an einer der folgenden Positionen befindet: an einer dem Sitz bzw. den Sitzen weiter entfernten Vorderseite des Lenkers, an einer dem Sitz bzw. den Sitzen näheren Rückseite des Lenkers oder an einer Position oberhalb des Lenkers.

3. Motorrad nach Anspruch 1, wobei das Motorrad nur einen Anzeigebildschirm umfasst.

4. Motorrad nach Anspruch 1, wobei die Instrumentenbilder zumindest zur Anzeige von Fahrinformationen des Motorrads und Statusinformationen des Motorrads verwendet werden; die Unterhaltungsbilder zumindest zur Anzeige einer oder mehrerer laufender Unterhaltungsanwendungen und/oder einer oder mehrerer unterstützter Unterhaltungsanwendungen verwendet werden; die Unterhaltungsanwendungen aus mindestens einer der folgenden Gruppen ausgewählt werden: Navigationsanwendung, Multimediaanwendung, Fahrerassistenzanwendung, Sprachsteuerungsanwendung und vernetzte Anwendungsplattform.

5. Motorrad nach Anspruch 1, wobei ein Verhältnis der Diagonale des Anzeigebildschirms zu einem Abstand vom Mittelpunkt des Vorderrads bis zum Mittelpunkt des Hinterrads im Bereich von 0,11 bis 0,3 liegt.

6. Motorrad nach Anspruch 1, wobei das Bedienelement ein Richtungsbedienelement umfasst; und ein Verhältnis der Diagonale des Anzeigebildschirms zu einem Abstand zwischen zwei entferntesten Enden des Richtungsbedienelements im Bereich von 0,19 bis 0,52 liegt.

7. Motorrad nach Anspruch 1, wobei, wenn das Motorrad auf einer horizontalen Fläche mit dem Vorder- und Hinterrad als Stützpunkten geparkt ist, ein Winkel zwischen dem Anzeigebildschirm und der horizontalen Fläche im Bereich von 20° bis 70° liegt.

8. Motorrad nach Anspruch 1, wobei die Steuereinheit in der Lage ist, den Anzeigebildschirm zunächst zur Anzeige der Bilder im ersten Anzeigemodus und anschließend zur Anzeige der Bilder im zweiten Anzeigemodus zu steuern, nachdem der Anzeigebildschirm aktiviert wurde.

9. Motorrad nach Anspruch 1, wobei ein Verhältnis der von den Instrumentenbildern auf dem Anzeigebildschirm eingenommenen Fläche zu der von den Unterhaltungsbildern auf dem Anzeigebildschirm eingenommenen Fläche im Bereich von 3 bis 20 im ersten Anzeigemodus liegt.

10. Motorrad nach Anspruch 1, wobei die im ersten Anzeigemodus auf dem Anzeigebildschirm angezeigten Unterhaltungsbilder nur ein Unterhaltungsschnellsymbol umfassen.

11. Motorrad nach Anspruch 1, wobei eine Anzeigeoberfläche des Anzeigebildschirms umfasst:
einen ersten Anzeigebereich für Instrumentenbilder zur Anzeige mindestens einiger der Instrumentenbilder;
einen ersten Anzeigebereich für Unterhaltungsbilder zur Anzeige mindestens einiger der Unterhaltungsbilder; und
einen umschaltbaren Anzeigebereich zur Anzeige einiger der Instrumentenbilder und/oder einiger der Unterhaltungsbilder im ersten Anzeigemodus;
die Steuereinheit in der Lage ist, den umschaltbaren Anzeigebereich des Anzeigebildschirms beim Empfang eines ersten Steuerbefehls im ersten Anzeigemodus durch das zentrale Steuersystem von einem ersten Anzeigebild auf ein zweites Anzeigebild umzuschalten; wobei die im ersten Anzeigemodus auf dem Anzeigebildschirm angezeigten Unterhaltungsbilder ein oder mehrere Unterhaltungsschnellsymbole und ein oder mehrere vereinfachte Unterhaltungsbilder umfassen; die Unterhaltungsschnellsymbole im ersten Unterhaltungsanzeigebereich angezeigt werden; und die vereinfachten Unterhaltungsbilder im umschaltbaren Anzeigebereich angezeigt werden.

12. Motorrad nach Anspruch 1, wobei die auf dem Anzeigebildschirm angezeigten Unterhaltungsbilder die Unterhaltungsschnellsymbole sowohl im ersten Anzeigemodus als auch im zweiten Anzeigemodus umfassen; und eine Anzahl der im zweiten Anzeigemodus angezeigten Unterhaltungsschnellsymbole größer oder gleich der Anzahl der im ersten Anzeigemodus angezeigten Unterhaltungsschnellsymbole ist.

13. Motorrad nach Anspruch 1, wobei die Steuereinheit ferner dazu verwendet wird, den Anzeigebildschirm zur Anzeige eines Negativbildschirms und/oder eines schwebenden Fensters im zweiten Anzeigemodus zu steuern; wobei die Anzeigeoberfläche des Anzeigebildschirms ferner einen zweiten Anzeigebereich für Instrumentenbilder und einen zweiten Anzeigebereich für Unterhaltungsbilder umfasst; und der Negativbildschirm und/oder das schwebende Fenster im zweiten Anzeigebereich für Unterhaltungsbilder angezeigt werden.

14. Motorrad nach Anspruch 1, wobei die Steuereinheit in der Lage ist, den Anzeigebildschirm vom ersten Anzeigemodus in den zweiten Anzeigemodus umzuschalten, wenn das zentrale Steuersystem aktiviert wird und das zweite Betriebssystem automatisch zu laufen beginnt; oder basierend auf einem ersten vorbestimmten Befehl der Steuereinheit; oder wenn die Steuereinheit einen Steuerbefehl für die Unterhaltungsschnellsymbole in der Anzeigeoberfläche des Anzeigebildschirms im ersten Anzeigemodus erkennt; oder wenn die Steuereinheit einen ersten Anzeigemodus-Umschaltbefehl erkennt.

15. Motorrad nach Anspruch 1, wobei die Steuereinheit in der Lage ist, den Anzeigebildschirm vom zweiten Anzeigemodus in den ersten Anzeigemodus umzuschalten, basierend auf einem Betriebszustand des zweiten Betriebssystems; oder basierend auf einem zweiten vorbestimmten Befehl der Steuereinheit; oder wenn die Steuereinheit einen zweiten Anzeigemodus-Umschaltbefehl erkennt.

## Revendications

1. Une motocyclette comprenant :
un cadre ;
une pluralité de roues comprenant au moins une roue avant et au moins une roue arrière ;
un système de suspension comprenant une suspension avant et une suspension arrière, la ou les roues avant étant reliées au cadre par la suspension avant, et la ou les roues arrière étant reliées au cadre par la suspension arrière ;
un système de propulsion disposé sur le cadre pour fournir de la puissance à la motocyclette, au moins l'une des roues avant et des roues arrière étant connectée au système de propulsion dans un mode de transmission ;
au moins une selle disposée sur le cadre ; et
un système de manipulation destiné à contrôler le fonctionnement de la motocyclette;
la motocyclette comprenant en outre un système de commande centralisé comprenant une unité de commande et un écran d'affichage, l'écran d'affichage étant disposé à proximité du système de manipulation et devant la ou les selles ; au moins deux systèmes d'exploitation fonctionnant dans l'unité de commande ; et lesdits au moins deux systèmes d'exploitation comprenant un premier système d'exploitation et un second système d'exploitation ; l'unité de commande étant apte à commander l'écran d'affichage pour afficher une ou plusieurs images d'instrumentation et une ou plusieurs images de divertissement dans au moins deux modes d'affichage différents et commutables, en fonction desdits deux systèmes d'exploitation ; lesdits deux modes d'affichage différents et commutables comprenant un premier mode d'affichage et un second mode d'affichage; les images d'instrumentation et les images de divertissement affichées sur l'écran d'affichage étant toutes générées sous le contrôle du premier système d'exploitation, et une surface occupée par les images d'instrumentation sur l'écran d'affichage étant supérieure à une surface occupée par les images de divertissement sur l'écran d'affichage dans le premier mode d'affichage ; au moins certaines des images d'instrumentation et au moins certaines des images de divertissement étant générées sous le contrôle du premier système d'exploitation et au moins d'autres images d'instrumentation et au moins d'autres images de divertissement étant générées sous le contrôle du second système d'exploitation dans le second mode d'affichage, et une surface occupée par les images d'instrumentation sur l'écran d'affichage étant inférieure ou égale à une surface occupée par les images de divertissement sur l'écran d'affichage dans le second mode d'affichage.

2. La motocyclette selon la revendication 1, dans laquelle le système de manipulation comprend un composant de direction comprenant une poignée gauche, une poignée droite et un guidon reliant la poignée gauche et la poignée droite ; l'écran d'affichage et le guidon intersectant tous deux un plan médian longitudinal de la ou des selles dans une direction gauche-droite ; l'écran d'affichage étant situé à l'une des positions suivantes : un côté avant du guidon plus éloigné de la ou des selles, un côté arrière du guidon plus proche de la ou des selles, ou une position au-dessus du guidon.

3. La motocyclette selon la revendication 1, dans laquelle la motocyclette comprend un seul écran d'affichage.

4. La motocyclette selon la revendication 1, dans laquelle les images d'instrumentation sont utilisées au moins pour afficher des informations de conduite de la motocyclette et des informations d'état de la motocyclette ; les images de divertissement étant utilisées au moins pour afficher une ou plusieurs applications de divertissement en cours d'exécution et/ou une ou plusieurs applications de divertissement prêtes à être exécutées, les applications de divertissement étant sélectionnées parmi au moins un des éléments suivants : application de navigation, application multimédia, application d'assistance à la conduite, application de commande vocale et application de réseau interconnecté.

5. La motocyclette selon la revendication 1, dans laquelle un rapport entre une longueur diagonale de l'écran d'affichage et une distance entre le centre de la roue avant et le centre de la roue arrière est compris entre 0,11 et 0,3.

6. La motocyclette selon la revendication 1, dans laquelle le système de manipulation comprend un composant de direction ; et un rapport entre la longueur diagonale de l'écran d'affichage et une distance entre les deux extrémités les plus éloignées du composant de direction est compris entre 0,19 et 0,52.

7. La motocyclette selon la revendication 1, dans laquelle, lorsque la motocyclette est garée sur un plan horizontal avec les roues avant et arrière comme points d'appui, un angle entre l'écran d'affichage et le plan horizontal est compris entre 20° et 70°.

8. La motocyclette selon la revendication 1, dans laquelle l'unité de commande est apte à commander l'écran d'affichage pour afficher les images dans le premier mode d'affichage en premier lieu, puis afficher les images dans le second mode d'affichage après activation de l'écran d'affichage.

9. La motocyclette selon la revendication 1, dans laquelle un rapport entre la surface occupée par les images d'instrumentation sur l'écran d'affichage et la surface occupée par les images de divertissement sur l'écran d'affichage est compris entre 3 et 20 dans le premier mode d'affichage.

10. La motocyclette selon la revendication 1, dans laquelle les images de divertissement affichées sur l'écran d'affichage comprennent uniquement une icône de raccourci de divertissement dans le premier mode d'affichage.

11. La motocyclette selon la revendication 1, dans laquelle une interface d'affichage de l'écran d'affichage comprend :
une première zone d'affichage d'instrumentation pour afficher au moins certaines des images d'instrumentation ;
une première zone d'affichage de divertissement pour afficher au moins certaines des images de divertissement ; et
une zone d'affichage commutable pour afficher certaines des images d'instrumentation et/ou certaines des images de divertissement dans le premier mode d'affichage ;
l'unité de commande étant apte à commander la zone d'affichage commutable de l'écran d'affichage pour basculer d'une première image d'affichage à une seconde image d'affichage lorsqu'une première commande de contrôle est reçue par le système de commande centralisé dans le premier mode d'affichage; les images de divertissement affichées sur l'écran d'affichage comprenant une ou plusieurs icônes de raccourci de divertissement et une ou plusieurs images de divertissement simplifiées dans le premier mode d'affichage ; les icônes de raccourci de divertissement étant affichées dans la première zone d'affichage de divertissement ; et les images de divertissement simplifiées étant affichées dans la zone d'affichage commutable.

12. La motocyclette selon la revendication 1, dans laquelle les images de divertissement affichées sur l'écran d'affichage comprennent les icônes de raccourci de divertissement à la fois dans le premier mode d'affichage et dans le second mode d'affichage ; et dans laquelle le nombre d'icônes de raccourci de divertissement affichées dans le second mode d'affichage est supérieur ou égal à celui des icônes de raccourci de divertissement affichées dans le premier mode d'affichage.

13. La motocyclette selon la revendication 1, dans laquelle l'unité de commande est en outre utilisée pour commander l'écran d'affichage pour afficher un écran négatif et/ou une fenêtre flottante dans le second mode d'affichage; dans laquelle l'interface d'affichage de l'écran d'affichage comprend en outre une deuxième zone d'affichage d'instrumentation et une deuxième zone d'affichage de divertissement; et l'écran négatif et/ou la fenêtre flottante sont affichés dans la deuxième zone d'affichage de divertissement.

14. La motocyclette selon la revendication 1, dans laquelle l'unité de commande est apte à commander l'écran d'affichage pour basculer du premier mode d'affichage au second mode d'affichage lorsque le système de commande centralisé est activé et que le second système d'exploitation démarre automatiquement ; ou sur la base d'une première commande prédéfinie de l'unité de commande ; ou lorsque l'unité de commande détecte une commande de contrôle des icônes de raccourci de divertissement dans l'interface d'affichage de l'écran d'affichage en premier mode d'affichage ; ou lorsque l'unité de commande détecte une commande de commutation du premier mode d'affichage.

15. La motocyclette selon la revendication 1, dans laquelle l'unité de commande est apte à commander l'écran d'affichage pour basculer du second mode d'affichage au premier mode d'affichage en fonction d'un état de fonctionnement du second système d'exploitation ; ou sur la base d'une seconde commande prédéfinie de l'unité de commande ; ou lorsque l'unité de commande détecte une seconde commande de commutation de mode d'affichage.
